(19) Europäisches Patentamt
European Patent Office
Office européen des brevets

(11) EP 1 403 139 B1

(12) EUROPEAN PATENT SPECIFICATION

(45) Date of publication and mention of the grant of the patent:
**21.04.2010 Bulletin 2010/16**

(51) Int Cl.:
***B60Q 1/48*** *(2006.01)*

(21) Application number: **03022001.6**

(22) Date of filing: **30.09.2003**

(54) **Movable body circumstance monitoring apparatus**

Umgebungserfassung für einen beweglichen Körper

Dispositif pour détecter l'environnement d'un corps mobile

(84) Designated Contracting States:
**DE FR GB**

(30) Priority: **30.09.2002 JP 2002284666**

(43) Date of publication of application:
**31.03.2004 Bulletin 2004/14**

(73) Proprietor: **AISIN SEIKI KABUSHIKI KAISHA**
**Kariya-shi, Aichi-ken (JP)**

(72) Inventors:
- **Kakinami, Toshiaki**
**Nagoya-shi**
**Aichi-ken (JP)**
- **Yamamoto, Shuji**
**Toyota-shi**
**Aichi-ken (JP)**

(74) Representative: **TBK-Patent**
**Bavariaring 4-6**
**80336 München (DE)**

(56) References cited:
**EP-A- 1 005 234**
**EP-A- 1 094 337**
**US-A1- 2001 017 591**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 403 139 B1

## Description

### FIELD OF THE INVENTION

This invention generally relates to a movable body circumstance monitoring apparatus optimized for monitoring circumstance of a movable body. More particularly, this invention pertains to a movable body circumstance monitoring apparatus optimized for monitoring an environment around the movable body and displaying an image of a view from the movable body positioned at an intended position. For example, the movable body circumstance monitoring apparatus is preferably utilized for monitoring an environment around a vehicle as the movable body and for displaying an object or an obstacle at a time like vehicle parking, when needed

### BACKGROUND OF THE INVENTION

In order to achieve minimization of a blind corner behind a vehicle, various types of apparatus for monitoring an environment behind the vehicle have been disclosed and further commercially offered in the markets. For example, one of the apparatus is provided with a camera at a vehicle rear side, which monitors the environment behind the vehicle, and a monitor set up near a driver's seat, which displays an image of the environment behind the vehicle captured by the camera.

For example, disclosed is an aid system for garaging an automobile in a Japanese Patent Laid-open published as No. 1987-278477 (Patent document 1). The aid system for garaging an automobile includes a computer for calculating an automobile driving track based upon signals outputted from a distance sensor and a steering wheel angle sensor. When the computer judges that a distance between the automobile on an expected driving track and an obstacle around the automobile is less than a predetermined distance, a user (mainly the driver) can be auditorily alerted by an alarm.

As another example, disclosed is a rear sight display unit for a vehicle in a Japanese Patent Laid-open published as No. 1989-141137 (Patent document 2). The rear sight display unit for the vehicle includes obstacle detecting sensors set at front left and front right portions of the vehicle for detecting the vehicle front sides approaching to obstacles. The detected information is displayed with the rear sight in a monitor window at the same time. Therefore, the vehicle backward operation by the driver can be performed without causing the vehicle front left and front right' portions to become in contact with the obstacles even if the driver's visual line is not shifted from the monitor window to the vehicle forward.

As a further example, disclosed is a parking support system in a Japanese Patent Laid-open published as No. 2001-187553 (Patent document 3). The parking support system includes a single camera for photographing surroundings of a moving vehicle at first and second points, an imaging unit for converting the surroundings of the moving vehicle into first and second images which are produced in time series, a stereoscopic object-specifying unit for detecting and specifying a stereoscopic object in each image, a vehicle position calculating unit for calculating a vehicle moving data from the first point to the second point, and a stereoscopic object distance calculating unit for calculating a distance between the vehicle and the stereoscopic object based upon the positions of the stereoscopic object in the first and second images and the vehicle moving data. The parking support system including the above structure generates a third image for instructing the driver based upon the images by the imaging unit and the distance between the vehicle and the stereoscopic object calculated by the stereoscopic object distance calculating unit. Therefore, an accurate distance between the vehicle and the stereoscopic object can be calculated in accordance with principles of triangulation modes with the stereoscopic object in the first and second images.

As a still further example, disclosed is a relative position detection device and a parking auxiliary apparatus furnished with the relative position detection device in a Japanese Patent Laid-open published as No. 2002-052999 (Patent document 4). According to the disclosure, an own vehicle stop position marker and a lateral direction gauging marker are superposed and displayed in a monitor window. Therefore, a position of the own vehicle relative to a reference object can be detected by use of the camera image and a general steering wheel angle sensor without using a gauge sensor. In this publication, the own vehicle stop position marker is defined as a marker for stopping the own vehicle in a positional relation that the own vehicle and the reference object are positioned possessing a predetermined orientation. The lateral direction gauging marker is defined as a marker for gauging a lateral distance between the own vehicle and the reference object in response to a vehicle moving amount in the monitor window.

In the meantime, a conventional technique has been widely known in an image processing technical field, which reconstructs a three-dimensional (3D) shape by use of two cameras. For example, a thesis "Solve a Stereophonic mechanism" (Nonpatent document 1) by Koichiro Deguchi in a publication entitled "Information Processing" (date of publication of vol. 37 No. 7: July, 1996) describes gauging a stereoscopic object by a stereo. According to the disclosure in the thesis, a position of each corresponding point in the space can be determined based upon features of the respective images shot by the two cameras (e.g. focal lengths of the two camera lenses, image centers thereof, pixel size thereof, and so on), positions and postures of the two cameras, and a corresponding of the two images.

Likewise, according to a column "Three-dimensional shape reconstruction by a stereo vision" (Nonpatent document 2) at pages 161 and 162 in a publication entitled "Mathematics of Spatial data" (date of publication of the first edition: March 10, 1995, publishing office: Asakura, Inc., author: KANATANI, Kenichi), a stereo vision is defined as a method of calculating a three-dimensional shape of a substance in accordance with principles of triangulation modes based upon a corresponding relation between the images shot by two cameras. The stereo vision is further defined as one of the most fundamental methods of extracting a three-dimensional information from images so as to be used for a robot control.

Further, according to another thesis "Manipulation of Videos" (Nonpatent document 3) by Koichiro Deguchi in the publication entitled "Information Processing" (date of publication of vol. 37 No. 8:August, 1996), a three-dimensional shape of an object in a video can be reconstructed in accordance with the same principles of the aforementioned stereo. Especially, when the video is produced with sequential images, the motion of the object can be tracked. Therefore, the video is considered to be more preferable than only two images in this regard for extracting corresponding points.

According to the above-described four patent documents, the view at a rear side of the vehicle can be photographed by the camera and be displayed in the monitor. Therefore, the vehicle can be moved rearward or parked observing the obstacle behind the vehicle displayed in the monitor. However, the environment around the vehicle corner is out of the view shot by the camera such that the environment can not be displayed in the monitor. In this case, when the vehicle is moved rearward while turning for example, the driver can not recognize whether or not there is a sufficient distance between a turning inside of the own vehicle corner and an obstacle such as the other vehicle.

In order to overcome the above drawback, a camera possessing an appropriate camera angle can be projected from the vehicle so as to encompass the corner portion of the own vehicle in the camera shot view. However, this type of arrangement of the camera on the vehicle may spoil a vehicle design, thereby not being appropriate for all types of vehicles. As the other method to overcome the above drawback, the camera can be mounted near the vehicle corner. However, it is considered to be difficult because a lighting unit is usually disposed around the vehicle corner. For example, when the camera is assembled in the lighting unit, the camera is required to be sufficiently heat-resistant or a surface cover of the lighting unit is required to be made of optical materials for the camera such that image quality is not spoiled. In this case, technical and cost problems still remain. Even if the camera can be assembled in the lighting unit, the road immediately below a vehicle bumper may not be able to be captured by the camera due to a projected portion of the vehicle bumper.

In light of foregoing, recent demands have lead to an apparatus capable of displaying an image of a vehicle corner or around, which does not appear in the view captured by the camera, without spoiling the vehicle design. However, it seems to be difficult to overcome the above-described drawback only from an aspect of the camera arrangement.

In the meantime, according to the image processing method .disclosed in the above nonpatent documents, a three-dimensional shape of an obstacle can be restored by use of a single camera. Therefore, if this type of image processing .method can be appropriately applied to an apparatus for monitoring an environment around a movable body such as a vehicle, it is considered to be a help to overcome the above-described drawback. None of the above documents disclose such a technology for applying the image processing method to the apparatus for monitoring the environment around the movable body. Further, the movable body circumstance monitoring apparatus can be applied not only to a vehicle but also throughout movable bodies such as a mobile robot. Generally, various requirements remain for the movable body circumstance monitoring apparatus, such as requirement of a method of detecting information on an environment such as a size and posture of a substance around the movable body. However, none of the documents disclose the description or suggestion.

According to the above-described Patent document 3, an image A shot while the vehicle 1 is at a position a is converted to an image as if it were shot while the vehicle 1 was at a position b, wherein an image C can be calculated. A distance between the vehicle and a stereoscopic object can be geometrically calculated based upon a deviation between the two images and the vehicle moving data. However, the Patent document 3 does not make a contribution to the above-described drawback.

In generic EP 1 005 234 A2, a feature point extracting section (22) extracts a feature point from the data of the stored still pictures. A three-dimensional coordinate data calculating section (23) calculates the distance from the vehicle body to the feature point and the height of the feature point based on the positional data of the feature point on the screen and the traveling distance data. A stereoscopic picture forming section (24) forms a stereoscopic picture image of a detected obstacle based on three-dimensional coordinate data of the feature points. However, patent document D2 does not disclose information combining means, specific view creating means, and displaying means as defined in claim 1.

A need exists for providing an improved movable body circumstance monitoring apparatus capable of assuring a view from a movable body at a desired position and appropriately displaying an image of the view, regardless of arrangement and quantity of a detecting method of detecting information of the environment such as size and position of a substance around the movable body.

## SUMMARY OF THE INVENTION

This need is covered by the movable body circumstance monitoring apparatus according to claim 1.

Further developments are set out in the dependent claims.

Herein, the information about the environment surrounding the movable body includes a size, position and so on of a substance around the movable body. The movable body includes a vehicle, a movable robot, and the like.

According to the movable body circumstance monitoring apparatus defined in the claims, the specific view can be created automatically in response to the detection by the obstacle detecting means or in response to the instruction by an operator, mostly by a driver.

For example, when the movable body circumstance monitoring apparatus defined in the claims is applied as a parking guide system of a vehicle, the vehicle moving track estimated by the track estimating means can be overlapped on the specific view including a parking space.

## BRIEF DESCRIPTION OF THE DRAWING FIGURES

The foregoing and additional features and characteristics of the present invention will become more apparent from the following detailed description considered with reference to the accompanying drawing figures wherein:

FIG. 1 is a block diagram illustrating a structure of a movable body circumstance monitoring apparatus according to a first embodiment of the present invention;

FIG. 2 is a block diagram illustrating a structure of a movable body circumstance monitoring apparatus according to a second embodiment of the present invention;

FIG. 3 is a block diagram illustrating a structure of a movable body circumstance monitoring apparatus according to a third embodiment of the present invention;

FIG. 4 is a block diagram illustrating a structure of a movable body circumstance monitoring apparatus according to a fourth embodiment of the present invention;

FIG. 5 is a perspective view illustrating a vehicle mounting the movable body circumstance monitoring apparatus as a parking guide system according to the embodiments of the present invention;

FIG. 6 is a block diagram illustrating a structure of the parking guide system according to the embodiments of the present invention;

FIG. 7 is a plan view illustrating a vehicle model according to the embodiments of the present invention;

FIG. 8 is a plan view illustrating an example of a method of detecting and tracking a positional coordinate of the movable body and a direction thereof after moving with reference to a positional coordinate of the vehicle and the direction thereof at a movement starting position in a predetermined three-dimensional coordinate according to the embodiments of the present invention;

FIG. 9 is a plan view illustrating an example of a condition specifying positional coordinate and posture of the vehicle in a third-dimensional map according to the embodiments of the present invention;

FIG. 10 is a plan view illustrating a displayed view shot by a virtual camera arranged at a rear portion of the vehicle according to the embodiments of the present invention;

FIG. 11 is a plan view illustrating a displayed view shot by virtual cameras respectively arranged at a front left corner of the vehicle and at a rear left corner thereof according to the embodiments of the present invention;

FIG. 12 is a plan view illustrating a displayed view shot by a virtual camera arranged at a side portion of the vehicle according to the embodiments of the present invention:

FIG. 13 is a plan view illustrating a displayed view at 180 degrees shot by a virtual camera arranged at an upper rear portion of the vehicle according to the embodiments of the present invention:

FIG. 14 is a plan view illustrating a displayed view at 360 degrees shot by a virtual camera arranged above the vehicle according to the embodiments of the present invention;

FIG. 15 is a plan view exemplifying how the displayed view varies in response to rearward movement of the vehicle according to the embodiments of the present invention;

FIG. 16 is a plan view exemplifying an image showing a rear portion of the vehicle at a position denoted with double dashed lines in FIG. 15 and an obstacle around the vehicle;

FIG. 17 is a plan view exemplifying an image showing a rear portion of the vehicle at a position denoted with a solid line in FIG. 15 and the obstacle around the vehicle;

FIGS. 18 (A) and (B) are plan views exemplifying a monitor showing a touch panel switch, wherein a screen displayed in the monitor is shifted from a normal displayed screen (A) to a screen (B) which displays a zoomed image;

FIG. 19 is a plan view exemplifying a movement of the vehicle which is parallel parked at a left-hand side along a vehicle forward moving direction;

FIG. 20 is a plan view exemplifying a virtual image of a front left corner portion of the vehicle displayed in a monitor when the vehicle is turned in an arrow direction after rearward moving in FIG. 19;

FIG. 21 a plan view exemplifying a virtual image from a cross-upper viewpoint of the vehicle so as to illustrate a condition for parallel parking the vehicle at the right-hand side along the vehicle forward moving direction according to the embodiments of the present invention;

FIG. 22 is a plan view exemplifying a virtual image from an above viewpoint of the vehicle so as to illustrate a condition the condition for parallel parking the vehicle at the right-hand side along the vehicle forward moving direction according to the embodiments of the present invention;

FIG: 23 is a plan view exemplifying a virtual image from a viewpoint of the vehicle upper front portion to a vehicle rear side so as to illustrate a condition for parallel parking the vehicle at the right-hand side along the vehicle forward moving direction according to the embodiments of the present invention;

FIG. 24 is an explanatory view for explaining a geometric relationship for shooting a feature point of a substance in the space by two cameras so as to reconstruct the three-dimensional shape according to the embodiments of the present invention;

FIG. 25 is an explanatory view for exemplifying a feature point tracking so as to reconstruct the three-dimensional shape according to the embodiments of the present invention; and

FIG. 26 is an explanatory view for exemplifying a tracking so as to reconstruct , the three-dimensional shape according to the embodiments of the present invention.

DETAILED DESCRIPTION OF THE INVENTION

Preferred embodiments of the present invention will be described hereinbelow in detail with reference to the accompanying drawings.

For example, a movable body circumstance monitoring apparatus according to a first embodiment of the present invention is mounted on a vehicle illustrated in FIG. 5 and is applied as a parking guide system. As illustrated in FIG. 1, the movable body circumstance monitoring apparatus is provided with an environment information detecting means EI for detecting and storing information of environment surrounding the movable body, such as size and position of an object around the movable body, and a movable body information detecting means MB for consecutively detecting and storing position and posture of the movable body. When the movable body corresponds to a vehicle, the movable body information detecting means MB can be configured with a sensor for detecting vehicle dynamic condition such as a vehicle driving speed, a vehicle steering condition, and a vehicle turning condition. According to the embodiment of the present invention, a coordinate depicting a vehicle position and an angle depicting a vehicle posture can be detected based upon at least a signal outputted from a sensor, which will be described later.

Further, the movable body circumstance monitoring apparatus is further provided with an information combining means CB, a specific view creating means SV, and a displaying means VD. The information combining means CB combines the movable body information detected by the movable body information detecting means MB and the information of the environment surrounding the movable body detected by the environment information detecting means EI, and corrects a relation of the position and posture of the movable body relative to the environment surrounding the movable body. The specific view creating means SV creates a specific view. of the movable body with reference to the information of the environment surrounding the movable body located at a specific position based upon the positional and postural relation of the movable body relative to the surrounding environment outputted from the information combining means CB. The displaying means VD displays a displayed image of the specific view created by the specific view creating means SV. For example, the displaying means VD can be represented by a monitor (not shown) installed in a movable body.

As illustrated in FIG. 1, the environment information detecting means EI is provided with an image capturing means IC, a feature point tracking means FP, a moving condition detecting means MC, and a three-dimensional coordinate estimating means TD. The image capturing means IC, such as a ccd camera, is provided on the movable body for shooting the environment surrounding the movable body and outputs an image information to the three-dimensional coordinate estimating means TD. More particularly, when the movable body moves from a first state to a second state, the image capturing means IC shoots the surrounding environment at least at the first and second states of the movable body and outputs two images reflecting the surrounding environment at the respective states. The feature point tracking means FP detects a coordinate of a feature point in the image shot at the first state and also a coordinate, which corresponds to the feature point, in the image shot at the second state. The moving condition detecting means MC detects the positions and postures of the movable body at least at the first and second states, respectively. The three-dimensional coordinate estimating means TD estimates a three-dimensional coordinate of the feature point based upon the position and posture of the movable body at the first and second states detected by the moving condition detecting means MC, the coordinate of the feature point in the image shot at the first state, and the coordinate, which corresponds to the feature point, in the image shot at the second state. When the movable body corresponds to the vehicle, the moving condition detecting means MC can be configured with a sensor for detecting the vehicle dynamic condition such as a vehicle driving condition, a vehicle steering condition, and a vehicle turning condition. Alternatively, the information outputted from the movable body information detecting means MB can be referred to for the moving condition detecting means MC.

A movable body circumstance monitoring apparatus according to a second embodiment of the present invention is mounted, for example on the vehicle 1 illustrated in FIG. 5 and is applied as the parking guide system. As illustrated in FIG. 2, the movable body circumstance monitoring apparatus is provided with an instruction inputting means IS in addition to the structure illustrated in FIG. 1. The instruction inputting means IS inputs an instruction reflecting a vehicle driver's intention regarding a specific view. A switching means SW is included in the specific view creating means SV. Operation of the switching mans SW switches the specific view created by the specific view creating means SV to a view selected based upon the driver's instruction inputted by the instruction inputting means IS. A mechanical switch (not shown) may be applied as the instruction inputting means IS. Further, when the monitor (not shown) is used as the displaying means VD, a touch panel on a display screen of the monitor may be applied as the instruction inputting means IS.

Still further, a voice recognition equipment may be applied as the instruction inputting means IS. The image displayed by the displaying means VD based on the output from the specific view creating means SV can be constructed with a predetermined image and other images which may have been enlarged, diminished, rotated, shot from a different viewpoint, or the like.

A movable body circumstance monitoring apparatus according to a third embodiment of the present invention is mounted, for example on the vehicle 1 illustrated in FIG. 5 and is applied as the parking guide system. As illustrated in FIG. 3, the movable body circumstance monitoring apparatus is provided with an obstacle detecting means OB in addition to the structure illustrated in FIG. 1. The obstacle detecting means OB detects an obstacle approaching to the environment surrounding the movable body based upon the information outputted from the environment information detecting means EI. In this case, the specific view creating means SV preferably creates the specific view which contains an obstacle detected by the obstacle detecting means OB. More particularly, the obstacle detecting means OB acts for detecting the obstacle approaching to the movable body within a predetermined distance relative thereto. For example, when the obstacle is detected to be located within a predetermined region possessing the movable body about a center of the region, an image of a view containing the obstacle can be automatically displayed.

A movable body circumstance monitoring apparatus according to a fourth embodiment of the present invention is mounted, for example on the vehicle 1 illustrated in FIG. 4 and is applied as the parking guide system. As illustrated in FIG. 4, the movable body circumstance monitoring apparatus is provided with a track estimating means TR in addition to a structure illustrated in FIG. 1. The track estimating means TR estimates a moving track of the movable body based upon the information detected by the movable body information detecting means MB. The specific view creating means SV includes an overlapping means OL for overlapping an expected moving track of the movable body estimated by the track estimating means TR on the specific view. The displaying means VD then displays an image in which the estimated moving track has been overlapped on the specific view. For example, an estimated vehicle driving track can be applied as the estimated moving track by the track estimating means TR, which will be described later with reference to FIGS. 21 through 23.

When the above-described movable body corresponds to a vehicle, the movable body circumstance monitoring apparatus is applied as a parking guide system illustrated in FIGS. 5 and 6. As illustrated in FIG. 5, a camera 2 (e.g. a ccd camera) corresponding to the image capturing means IC is mounted at a rear portion of the vehicle 1 so as to obtain an image of the environment around there. The image information obtained by the camera 2 is provided to an electronic control unit 10. The electronic control unit 10 is housed in a container mounted on the vehicle 1 and acts as the moving condition detecting means MC, the movable body information detecting means MB, the three-dimensional coordinate estimating means TD, the information combining means CB, the specific view creating means SV, the switching means SW, the overlapping means OL, and the track estimating means TR. A steering angle sensor 4 is disposed in the vehicle 1 so as to detect a steering angle of a steering wheel 3. A shift lever switch 6 is disposed in the vehicle 1, which is turned on when a shift lever 5 is shifted to a reverse stage. The detected steering angle and the on signal are then provided to the electronic control unit 10, respectively.

Further, according to the embodiments of the present invention, vehicle wheel speed sensors 7 are mounted on respective vehicle wheels so as to detect rotational speed of the respective corresponding vehicle wheels. The detected vehicle wheel speed is supplied to the electronic control unit 10. Accordingly, a moving distance of the movable body at least between a first position and a second position can be gauged based upon the detection result of the vehicle wheel speed sensors 7. A monitor 8 is arranged at a predetermined position in the vehicle 1 and should be easily visible by the driver. The monitor 8 displays visual information for parking guiding in response to output signals from the electronic control unit 10. That is, according to the embodiments of the present invention, the monitor 8 acts as the displaying means VD explained in FIGS. 1 through 4. Further, a speaker 9 is disposed at a predetermined position in the vehicle 1, thereby enabling to output audio information for parking guiding in response to an output signal from the electronic control unit 10.

With reference to FIG. 6, the steering angle sensor 4, the shift lever switch 6, and the vehicle wheel speed sensors 7 are connected to a CPU 11 in the electronic control unit 10 via an input interface (not shown). The monitor 8 is connected to a superimposing module 14 in the electronic control unit 10 via an output interface (not shown). The speaker 9 is connected to the CPU 11 via an audio outputting module 15. The camera 2 is connected to an image recognizing module 12, a graphics drawing module 13, and the superimposing module 14 via the input interface. The CPU 11, the image recognizing module 12, the graphics drawing module 13, a superimposing module 14, and an audio outputting module 15 are connected by bus bars, respectively. Information in each module is stored for a predetermined period of time and can be read out when needed.

The information of the image of the environment surrounding the vehicle 1 shot by the camera 2 is supplied to the CPU 11 for calculation via the image recognizing module 12. The signal outputted from the vehicle wheel seed sensors 7 and so on are also supplied to the CPU 11 for the calculation. The graphics drawing module 13 draws a three-dimensional graphics in response to, a synchronization signal extracted from the image shot by the camera 2 based upon the calculated result. In the meantime, calculation is performed by the CPU 11 for the purpose of the parking assistance. A graphics based upon the calculation result is drawn by the graphics drawing module 13. The graphics drawn by the graphics drawing module 13 and the image shot by the camera 2 are superposed by the superposing module 14 when needed and are displayed in the window screen of the monitor 8. In this case, it is possible to display an image containing only the graphics in the window screen of the monitor 8. As described above, the three-dimensional coordinate estimating means TD, the information combining means CB, and the specific view creating means SV are configured with the CPU 11, the image recognizing module 12, and the graphics drawing module 13.

As described above, when the vehicle 1 is moved from the first state to the second state, the feature point tracking means FP detects the coordinate of the feature point in the image shot at the first state by the camera 2 and also detects the coordinate, which corresponds to the feature point, in the image shot at the second state by the camera 2. The moving condition detecting means MC detects the positions and postures of the movable body at least at the first and second states, respectively. In the foregoing manner, the three-dimensional coordinate estimating means TD reconstructs a three-dimensional shape based upon the positions and postures of the movable body at the first and second states, the coordinate of the feature point in the image shot at the first state by the camera 2, and the coordinate, which corresponds to the feature point, in the image shot at the second state by the camera 2, wherein a three-dimensional coordinate of the feature point can be obtained.

The above-described reconstruction of the three-dimensional shape is carried out based upon the principles of triangulation by use of images as disclosed for example in the aforementioned nonpatent document 2 and are described hereinafter with reference to FIGS. 24 through 26. As illustrated in FIG. 24, when observing an identical point M in the space at least from two camera positions, as shown as o and o' on the left and right sides in FIG. 24, light rays in the air connecting the optical center of the camera and points $m_1$ and $m_2$ observed in the images shot by the respective cameras can be determined. An intersecting point of both light rays represents the point M in the space. In this case, the three-dimensional point M in a scene of interest needs to be identified between the images.

In the meantime, when the three-dimensional shape is reconstructed by use of a single camera, it is necessary to extract the feature points of an object of interest in the images and to track those feature points. Further, it is one of the conditions for reconstructing the three-dimensional shape that internal parameters (e.g. a scale factor, and an optical axis position coordinate) of the camera, and external parameters (e.g. position and posture with respect to the camera of the vehicle) are required to be well known and to have been calibrated in advance.

In order to restore the three-dimensional shape depending on the shift of the scene of interest, a corresponding stereo can be applied to determine at which position and posture of the camera each time-serial image was photographed, as far as the correspondences have been calibrated by a dead-reckoning system. However, it is necessary to identify the corresponding points in the time-serial images which are shot by the camera so as to contain the identical points, thereby enabling to reconstruct the three-dimensional shape in the scene of interest.

Detection of the feature point in the scene of interest can be carried out by detecting some feature points which characterize the object in the scene of interest. The feature points in this case correspond to points possessing appropriate characteristics which are traceable along with the processing sequence of the image. An automatic correlation shown as formula 1 discussed below can be applied for detecting the feature points. A matrix A functions to average derivatives of the image signal included in a window region W containing a point p(x, y) in the image. Thus, an optimal feature point can be obtained by using the matrix A. That is, the feature point suitable for the tracking generally corresponds to a corner and an intersecting point of lines (e.g., a block dot at a corner of the left side of the drawing in Fig. 25) and the matrix A detects this sort of feature point. According to formula 1 below, I(x, y) shows a function of the image, $I_x$ shows a gradient of the image relative to an x-axis, Iy shows a gradient of the image relative to a y-axis, and ($x_k$, $y_k$) shows an image point in the window W having (x, y) as a centre of the image.

[Formula 1]

$$A(x,y)=\begin{bmatrix} \sum_W (I_x(x_k,y_k))^2 & \sum_W (I_x(x_k,y_k)I_y(x_k,y_k)) \\ \sum_W (I_x(x_k,y_k)I_y(x_k,y_k)) & \sum_W (I_y(x_k,y_k))^2 \end{bmatrix}$$

An Image sequence I (u, t) having a coordinate of an image point at u=[x, y]$^T$ is considered for feature tracking. Presuming that the brightness of the image does not change after elapsing a minute time when a sample cycle is sufficiently short, formula 2 is obtained.

[Formula 2]

$$I(\mathbf{u}, t) = I(\delta(\mathbf{u}), t + \tau)$$

With the formula 2, δ(u) represents a motion field (i.e., projection of a three-dimensional motion vector to the image). Because the sample cycle is sufficiently short, as shown in a formula 3, the motion or the shift of the image can be approximated using only a translation element out of the motion elements including a rotation element and the translation element. "d" in the formula 3 represents a displacement vector.

[Formula 3]

$$\delta(\mathrm{u}) = u + d$$

In order to calculate the corresponding displacement vector d relative to each selected feature point and each tracked pair of points in the image sequence, a tracker is applied. In practice, because the motion model of the image cannot be recovered perfectly due to the influence of the noise, the above formula 2 does not function sufficiently. Accordingly, as shown in formula 4, the displacement vector d may be calculated by a sum of square difference. The displacement vector d, which minimizes a residual of the formula 4, is obtained and the feature points are tracked in the direction of the displacement vector d as illustrated in FIG. 25. "W" of the formula 4 represents a window for detecting the feature points with reference to the point u.

[Formula 4]

$$\varepsilon = \sum_{W} \left[ I(\mathbf{u} + \mathbf{d}, t + \tau) - I(\mathbf{u}, t) \right]^2$$

As illustrated in FIG. 26, a tracks is a set. of points characterising an identical object among the image sequences. Image points of each track correspond to projections of respective three-dimensional points. Although the tracks of an image sequence should not be lost, the tracking has to be stopped when the tracking points cannot be detected because the points to be tracked are out of the image or are hidden, or due to noise. Hereinafter, starting from a set of the feature points detected in a first image, the feature points of the previous image, i.e., Img A in Fig. 26, are tracked in the next image, i.e., Img B in Fig. 26. In case that some of the feature points in the Img A is not tracked in the Img B, new feature points are searched in the Img B and the new feature points are referred to as starting points for the tracking thereafter.

When a distance between the position M and the camera position in the three-dimensional space is z, formula 5 is obtained with the projection at a position m in the image. With the formula 5, a distance f is referred to as a focal length. Hereinafter, the distance f is defined with a unit length at 1 so as to simplify the formula 5. In the foregoing manner, a geometric relation for shooting the feature point in the space, such as a peak point of an object, by use of two cameras can be described as illustrated in FIG. 24.

[Formula 5]

$$M = \frac{Z}{f} m \qquad M = Zm$$

'As illustrated in FIG. 24, the second camera coordinate system can be produced by giving rotation matrix R and translation vector T to the first camera coordinate system with a central focus on the original viewpoint o. The translation vector T is referred to as a baseline vector. The parameters {T, R} depict a relative positional and postural relationship between these two camera viewpoints. Therefore, when the object is photographed by a single camera, the camera movement such as translation and rotation can be measured by the dead reckoning system.

Further, as illustrated in FIG. 24, the projections of the position M in the three-dimensional space are assumed to be positioned at the coordinates $m_1$ and $m_2$ in each image. The direction of the feature point from the viewpoint o' of the second camera coordinate system is depicted with a vector $m_2$ with respect to the second camera coordinate. However, the second camera coordinate was produced by giving rotation matrix R to the first camera coordinate system. Therefore, the direction of the feature point from the viewpoint o' is depicted with $Rm_2$ with respect to the first camera coordinate system, wherein formula 6 is obtained.

[Formula 6]

$$\mathbf{Zm_1 = T + Z'Rm_2}$$

The aforementioned distances Z and Z' are calculated in accordance with a formula 7.

[Formula 7]

$$Z = \frac{(\mathbf{T} \times \mathbf{Rm_2}, \mathbf{m} \times \mathbf{Rm_2})}{\|\mathbf{m_1} \times \mathbf{Rm_2}\|^2}, \qquad Z' = \frac{(\mathbf{T} \times \mathbf{m_1}, \mathbf{m_1} \times \mathbf{Rm_2})}{\|\mathbf{m_1} \times \mathbf{Rm_2}\|^2}$$

As described above, the distances Z and Z' in the three-dimensional space can be restored depending on the coordinates $m_1$ and $m_2$ of the projections onto the respective images from the two different camera viewpoints. The aforementioned track is the set of points in the objective view. Therefore, the three-dimensional shape can be restored based upon the calculation in accordance with the formula 7 regarding all tracks.

As shown in FIG. 1, the dead reckoning system as the moving condition detecting means MC for detecting the moving state of the vehicle can be configured with at least one sensor for detecting the vehicle dynamic state such as the vehicle running speed, the steering condition, the vehicle turning condition and the like. According to the embodiments of the present invention, the dead reckoning system can be configured with the vehicle wheel speed sensor 7 and can be applied as the movable body information detecting means MB. In the foregoing manner, the object existing in the imaged region can be specified based upon the vehicle positions and postures at the first and second conditions, and the corresponding points identified between the specified images by extracting and tracking the feature points in the images shot by the camera 2 at the first and second conditions, wherein the three-dimensional coordinate in the imaged region can be estimated.

According to the embodiments of the present invention, the dead-reckoning system is constructed for detecting the vehicle state, i.e. the position and the direction (i.e., angle about the vertical axis) of the vehicle 1, based on the wheel speed signals detected by the vehicle wheel speed sensors 7. The movable body information detecting means MB is configured with the dead reckoning system.

Next, the following description will be given for explaining a method of detecting the condition of the vehicle 1 according to the embodiments of the present invention. As illustrated in FIG. 7, the position and the direction of the vehicle 1 may be defined with three variables (x, y, θ). When the vehicle speed is defined as a vehicle speed V and the angular velocity of the vehicle 1 is defined as an angular velocity ω, the following formula is established between the vehicle state, the vehicle speed, and the angular velocity. That is:

$$dx/dt = V \cdot \cos\theta,$$

$$dy/dt = V \cdot \sin\theta,$$

and

$$d\theta/dt = \omega.$$

Although the vehicle speed V and the angular velocity ω cannot be directly measured, these values can be determined using the wheel speed of the rear wheels on the right and left detected by the wheel speed sensors as follows. That is:

$$V = (Vrr + Vrl) / 2,$$

and

$$\omega = (Vrr - Vrl) / Lt,$$

wherein Vrr stands for the wheel speed of the rear right wheel and Vrl stands for the wheel speed of the rear left wheel, and Lt stands for a tread length of the vehicle.

According to the foregoing formulas, the vehicle state (x, y, θ) at a time t can be shown in the following manner when an initial value ($x_0$, $y_0$, $\theta_0$) when t equals to zero is determined.

$$x = x_0 + \int (dx/dt)dt$$

wherein ∫ is varied from t equal to zero to t equal to t (i.e., t =0 → t=t)

$$y = y_0 + \int (dy/dt)dt$$

wherein ∫ is varied from t equal to zero to t equal to t (i.e., t =0 → t=t)

$$\theta = \theta_0 + \int (d\theta / dt) dt$$

wherein ∫ is varied from t equal to zero to t equal to t (i.e., t =0 → t=t)

That is, the vehicle state (x, y, θ) will be determined as shown in a formula 8.

[Formula 8]

$$x = x_0 + \int_{t=0}^{t} \dot{x} dt$$

$$y = y_0 + \int_{t=0}^{t} \dot{y} dt$$

$$\theta = \theta_0 + \int_{t=0}^{t} \dot{\theta} dt$$

FIG. 8 shows the condition of the vehicle performing a turning movement on $X_0$-$Y_0$ plane (i.e., $Z_0$=0) pursuant to the three-dimensional coordinates ($X_0$, $Y_0$, Zo). The positional relationship from a first vehicle condition determined by a first position (i.e., coordinates ($x_1$, $y_1$)) and a first direction (i.e., angle $\theta_1$) to a second vehicle condition determined by a second position (i.e., coordinates ($x_2$, $y_2$)) and a second direction (i.e., angle $\theta_2$) can thus be determined. Although the vehicle position (i.e., coordinates) and the direction (i.e., angle) are detected based on the detected wheel speed by the wheel speed sensors 7 for the rear wheels on the right and left, the position and direction of the vehicle 1 may be determined by use of the steering angle sensor 4, a yaw rate sensor (not shown), a distance sensor (not shown), or combinations of those. Although FIG. 8 shows the plain circle turning movement of the vehicle 1, the vehicle movement can be tracked in accordance with combination of plural arcs or direct lines based upon the above-described coordinates and directions of the vehicle 1.

Meanwhile, as illustrated in FIG. 9, the three-dimensional environment estimated by the three-dimensional coordinate estimating means TD is stored in a memory as a three-dimensional map denoted with broken lines with reference to the three-dimensional coordinates (X, Y, Z). There are the other vehicles which are not the own vehicle and shot by the camera 2, the obstacles, the buildings which are shot by the camera 2, and the like in the three-dimensional map. However, their illustrations are omitted.

Three-dimensional maps are denoted with broke lines in FIGS. 10 through 14 as well. The three-dimensional coordinate in FIG. 8 is corresponded relative to the three-dimensional map. That is, the relative positional and postural relationship of the vehicle 1 to the surrounding environment is corrected by the information combining means CB. More particularly, the vehicle 1 illustrated in FIG. 8 is positioned in the three-dimensional map denoted with the broken lines in FIG. 9. Therefore, the position (coordinate), of the vehicle 1 and the posture, i.e. the direction (angle) of the vehicle 1 are specified in the three-dimensional map.

The specified view is created by the specified view creating means SV when a camera is assumed to have been oriented in a predetermined direction on the vehicle 1 positioned at a predetermined point in the third-dimensional environment containing the environment around the vehicle 1. An image of the view shot by this virtual camera is displayed in the monitor 8 as the displaying means VD. FIG. 10 shows which region is contained in a view shot by the virtual camera 2a in accordance with the third-dimensional map with the vehicle 1 after moving. In other words, a region denoted with Sa in FIG. 10 is contained in the view shot by the virtual camera 2 and is displayed as a virtual image in the monitor 8. Hereinafter, the region displayed in the monitor 8 is referred to as a displayed view.

FIG. 11 shows displayed views Sb and Sc contained in views shot by a virtual camera 2b mounted at a front left corner of the vehicle 1 and by a virtual camera 2c mounted at a rear left corner thereof in accordance with the third-dimensional map with the vehicle 1 after moving. In the same manner, FIG. 12 shows a displayed view Sd contained in a view shot by a virtual camera 2d in accordance with the third-dimensional map with the vehicle 1 after moving.

The angles photographed by the cameras illustrated in FIGS. 10, 11, and 12 are designed to be substantially similar to the angle shot by the actual camera 2. Alternatively, as illustrated in FIG. 13, a virtual camera 2e can be mounted on the vehicle 1 so as to set a displayed view Se at 180 degrees. Therefore, the monitor 8 can display a virtual image which also contains views around the left and right corners which can not be shot by the actual camera 2. Further, as illustrated in FIG. 14, a virtual camera 2f can be mounted above the vehicle 1 so as to set a displayed view Sf at 360 degrees. The monitor 8 can display a virtual image containing this view shot by the virtual camera 2f.

The above-described virtual image varies depending on the movement of the vehicle 1, i.e. depending on shifting of the view in response to the movement of the virtual cameras. According to the embodiments of the present invention, the monitor 8 can display a virtual image containing the obstacle shot during the vehicle movement when needed. For example, as illustrated in FIG. 15, when the vehicle 1 is located at a position denoted with double dashed lines, the obstacle OB appears in a region Sp denoted with double dashed lines, wherein the monitor 8 displays an image containing the obstacle OB. Once the vehicle 1 is moved from the aforementioned position in an arrow direction down to a position denoted with a solid line, the obstacle OB disappears in a region Sn denoted with a solid line, wherein the displayed image in the monitor 8 does not contain the obstacle OB. In response to further movement of the vehicle 1 in the arrow direction from the position denoted with the solid line, the obstacle OB approaches to a portion between the rear left corner of the vehicle 1 and the front left thereof. In this case, the obstacle OB deviates from a view which can be shot by the camera 2, wherein the monitor 8 may not display the obstacle approaching to the vehicle 1.

Under the above-described condition between the vehicle 1 and the obstacle OB, if the virtual view shot by the virtual camera 2e above the vehicle 1 is displayed in the monitor 8, the displayed image can contain both corners of the vehicle 1 as illustrated in FIGS. 16 and 17. As illustrated in FIG. 17, a relative position of the obstacle OB to the vehicle 1 is shifted in an arrow direction illustrated in FIG. 17 from the position denoted with the double dashed lines. The obstacle OB is then illustrated with a solid line. As described above, even if the obstacle OB deviates from an actual view shot by the actual camera 2, the driver can recognize the position of the obstacle OB through the screen of the monitor 8.

According to the embodiments of the present invention, the instruction inputting means IS and the switching means SW switches an image to be displayed in the monitor 8 between the image actually shot by the actual camera 2 and a virtual image such as the images illustrated in FIGS. 16 and 17. More particularly, as illustrated in FIG. 18, the monitor 8 possesses a displayed screen (A) which shows not only the image (not shown) of the rear view of the vehicle 1 but also touch panel switches indicating "Left corner" and "Right corner". For example, when the driver or user touches the touch panel switch for the left corner shown in the displayed screen (A), the displayed screen (A) is switched to a screen (B) which zooms the left corner of the vehicle 1. In this case, the driver can easily recognize the obstacle OB approaching to the left corner of the vehicle 1. As described above, it is preferable that the portion of the vehicle 1 is zoomed in the monitor 8 as the driver intends. Alternatively, the display illustrated in FIG. 13 can be moved from side to side or can be auditorily warned about the obstacle OB approaching to the vehicle 1.

As described above, the obstacle OB around the vehicle 1 can be recognized by the user, especially by the driver, in a three-dimensional environment. Optimizing this matter, according to the embodiments of the present invention, when the obstacle within easy reach from the vehicle 1 deviates from the view actually shot by the camera 2, the monitor 8 can automatically display environments outside the view by the camera 2 as a virtual image. For example, as illustrated in FIG. 19, when the vehicle 1 is parallel parked at the left-hand side of the road, the vehicle 1 is moved rearward and turned in an arrow direction, i.e. in a counterclockwise direction. In this case, the front left corner of the vehicle 1 may unfavorably become in contact with a rear portion of the other vehicle OV. In this case, when the obstacle detecting means OB is included in the movable body circumstance monitoring apparatus illustrated in FIG. 3, the other vehicle OV approaching to the vehicle 1 within the predetermined distance can be recognized as an obstacle. The specific view can be created by the specific view creating means SV so as to contain the vehicle OV. As described above, a virtual image including a front left corner portion of the vehicle 1 can be displayed or switchably selected in the monitor 8 as illustrated in FIG. 20 automatically or following the driver's intention.

As described above, the surrounding environment including the other vehicle OV is actually shot by the camera 2 when the vehicle 1 is moved rearward for the parallel parking after forward moving in a region illustrated in FIG. 19. The information of the surrounding environment including the other vehicle OV has been stored as a third-dimensional environment map in the memory (not shown). Therefore, the position (coordinate) and posture (direction) of the vehicle 1 can be specified in the three-dimensional environment map. When a distance between the front left corner portion of the vehicle 1 and the rear portion of the other vehicle OV is judged to be less than a predetermined distance, the virtual image shown in FIG. 20 can be automatically displayed in the monitor 8. The driver can be auditorily alarmed at the same time as the display in the monitor 8. Further, when the electronic control unit 10 judges that the vehicle 1 may become in contact with the other vehicle OV, a warning notice can be displayed in the monitor 8 with some alarm. Still further, when other obstacle such as the other vehicle OV is detected to be located within a region at a predetermined distance away from the own vehicle, a virtual image containing the obstacle can be automatically displayed in the monitor 8. In this case, the driver also can be auditorily warned instead of display in the monitor 8.

As illustrated in FIG. 4, according to the fourth embodiment of the present invention, the movable body circumstance monitoring apparatus includes the track estimating means TR for estimating the moving track of the movable body based upon the information detected by the movable body information detecting means MB. The specific view creating means SV is provided with the overlapping means OL for overlapping the moving track estimated by the track estimating means TR onto the specific view. For example, when the vehicle 1 is parallel parked at the right-hand side on the road as illustrated in FIGS. 21 through 23, the overlapping means OL overlaps a recommended course for parking guide RC and an expected moving track EC of the vehicle 1. These overlapped images can be displayed as a virtual image in the monitor 8. The expected moving track EC of the vehicle 1 for the vehicle rearward movement can be calculated based upon an information representing the vehicle operation condition such as the steering angle detected by the steering angle sensor 4 illustrated in FIG. 5. The calculation of the expected moving track EC can be calculated in accordance with a known method for a conventional parking guide such that the description will be omitted hereinafter.

FIGS. 21, 22, and 23 show a parking space PS, respectively. As described above, even if the vehicle 1 is provided with the camera 2 only at the rear portion thereof, the information of the surrounding environment shot by the camera 2 is stored in the memory as the third-dimensional environment map while the vehicle 1 has been moving rearward to a certain degree after the forward movement in the region illustrated in each figure. Therefore, the monitor 8 can display the virtual image in the region illustrated in each FIG. 21, 22, and 23 when the vehicle 1 is further moving rearward.

As described above, according to the embodiments of the present invention, the virtual image can be displayed in the monitor 8 by use of the single camera 2. Therefore, the camera does not have to be mounted at a portion such as a vehicle corner which may not be preferable from a technical or designing point of view. Further, a desired virtual image can be displayed in the monitor 8 when needed based upon the information of the 'environment surrounding the vehicle 1 actually shot by the camera 2, independently from the position and orientation of the camera 2 mounted on the vehicle 1.

According to the embodiments of the present invention, the camera 2 mounted at the rear portion of the vehicle 1 illustrated in FIG. 5 is applied as the image capturing means IC. Alternatively, a camera which is mounted at a side portion of the vehicle 1 or a front portion thereof can be applied as the image capturing means IC.

Further, the three-dimensional environment map is created only by use of the single camera 2. Alternatively, the three-dimensional environment map can be created by use of plural cameras.

## Claims

**1.** A movable body circumstance monitoring apparatus comprising:

an environment information detecting means (EI) for detecting and storing information about an environment surrounding a movable body (1);

a movable body information detecting means (MB) for detecting and storing position and posture of the movable body;

an information combining means (CB) for combining the information detected by the movable body (1) information detecting means (MB) and the information detected by the environment information detecting means (EI), correcting a positional and postural relationship of the movable body (1) relative to the environment surrounding the movable body (1), and outputting the relationship;

a specific view creating means (SV) for creating a specific view of the movable body with reference to an information of an environment surrounding the movable body at a specific position based upon the information outputted from the information combining means (CB); and

a displaying means (VD) for displaying the specific view created by the specific view creating means (SV) as an image,

wherein the environment information detecting means (EI) includes at least one image capturing means (IC) mounted on the movable body for obtaining an image of the surrounding of the movable body (1), and for outputting the image, the image capturing means (IC) obtaining a first image at least at a first state of the movable body (1) and obtaining a second image at least at a second state thereof when the movable body (1) moves from the first state to the second state;

a feature point tracking means (FP) for detecting a coordinate of a feature point in the first image at the first state of the movable body (1) and for detecting a coordinate, which corresponds to the feature point, in the second image at the second state thereof,

a moving condition detecting means (MC) for detecting the position and posture, i.e. the direction angles of the movable body (1) at least at the first and second states; **characterized by**

a three-dimensional coordinate estimating means (TD) for estimating a three-dimensional coordinate of the feature point based upon the position and posture of the movable body (1) at the first and second states detected by the moving condition detecting means (MC), the coordinate of the feature point in the image at the first state of the movable body, and the coordinate, which corresponds to the feature point, in the image shot at the second state,
wherein the information combining means corrects the position and posture of the movable body (1) relative to the surrounding environment, whereby the movable body (1) is positioned in a three-dimensional environment map.

**2.** A movable body circumstance monitoring apparatus according to claim 1, wherein the moving condition detecting means (MC) detects the position and posture of the movable body at the first and second states based upon the information detected by the movable body information detecting means (MB).

**3.** A movable body circumstance monitoring apparatus according to claims 1 or 2, further comprises:

an instruction inputting means (IS) for inputting an instruction related to the specific view by an operator of the movable body, and
a switching means (SW) included in the specific view creating means (SV) for switching the specific view to a view based upon the instruction from the operator in response to a result of inputting by the instruction inputting means (IS).

**4.** A movable body circumstance monitoring apparatus according to claims 1 or 2, further comprises:

an obstacle detecting means (OB) for detecting an obstacle approaching to the surrounding of the movable body based upon the information detected by the environment information detecting means (EI),

wherein the specific view creating means (SV) creates the specific view which includes the obstacle detected by the obstacle detecting means (OB).

**5.** A movable body circumstance monitoring apparatus according to claims 1 or 2, further comprises:

a track estimating means (TR) for estimating a moving track of the movable body based upon the information detected by the movable body information detecting means (MB), and
an overlapping means (OL) included in the specific view creating means (SV) for overlapping the moving track estimated by the track estimating means (TR) on the specific view,
wherein the displaying means (VD) displays an image overlapping the estimated moving track on the specific view.

**Patentansprüche**

**1.** Umgebungsüberwachungsvorrichtung für einen beweglichen Körper, mit:

einer Umfeldinformationserfassungseinrichtung (EI) zum Erfassen und Speichern von Informationen über ein Umfeld, die einen beweglichen Körper (1) umgibt;
einer Erfassungseinrichtung für Informationen über einen beweglichen Körper (MB) zum Erfassen und Speichern einer Position und Haltung des beweglichen Körpers;
einer Informationskombinierungseinrichtung (CB) zum Kombinieren der Informationen, die durch die Erfassungseinrichtung (MB) für Informationen über einen beweglichen Körper (1) erfasst werden, und den Informationen, die durch die Umfeldinformationserfassungseinrichtung (EI) erfasst werden, Korrigieren einer die Lage und Haltung betreffenden Beziehung des beweglichen Körpers (1) relativ zu dem Umfeld, die den beweglichen Körper (1) umgibt, und Ausgeben der Beziehung;
einer Erzeugungseinrichtung (SV) für eine spezifische Ansicht zum Erzeugen einer spezifischen Ansicht des beweglichen Körpers mit Bezug auf Informationen über ein Umfeld, die den beweglichen Körper an einer spezifischen Position umgibt, basierend auf den Informationen, die von der Informationskombinierungseinrichtung (CB) ausgegeben werden; und
einer Anzeigeeinrichtung (VD) zum Anzeigen der spezifischen Ansicht, die durch die Erzeugungseinrichtung (SV) für eine spezifische Ansicht erzeugt wird, als ein Bild,
wobei die Umfeldinformationserfassungseinrichtung (EI) zumindest eine Bildaufnahmeeinrichtung (IC) umfasst, die auf dem beweglichen Körper angebracht ist, zum Erhalten eines Bildes des Umfelds des beweglichen Körpers (1) und zum Ausgeben des Bildes, wobei die Bildaufnahmevorrichtung (IC) ein erstes Bild in zumindest einem ersten Zustand des beweglichen Körpers (1) erhält und ein zweites Bild in zumindest einem zweiten Zustand von diesem erhält, wenn sich der bewegliche Körper (1) von dem ersten Zustand zu dem zweiten Zustand bewegt;
einer Merkmalspunktverfolgungseinrichtung (FP) zum Erfassen einer Koordinate eines Merkmalspunkts in dem ersten Bild in dem ersten Zustand des beweglichen Körpers (1) und zum Erfassen einer Koordinate, die dem Merkmalspunkt entspricht, in dem zweiten Bild in dem zweiten Zustand von diesem,
einer Bewegungszustandserfassungseinrichtung (MC) zum Erfassen der Position und Haltung, das heißt den Richtungswinkeln des beweglichen Körpers (1) in zumindest dem ersten und zweiten Zustand;
**gekennzeichnet durch**
eine Schätzungseinrichtung (TD) einer dreidimensionalen Koordinate zum Schätzen einer dreidimensionalen Koordinate des Merkmalspunkt basierend auf der Position und Haltung des beweglichen Körpers (1) in dem ersten und zweiten Zustand, die **durch** die Bewegungsbedingungserfassungseinrichtung (MC) erfasst werden, der Koordinate des Merkmalspunkt in dem Bild in dem ersten Zustand des beweglichen Körpers und der Koordinate, die dem Merkmalspunkt entspricht, in der Bildaufnahme in dem zweiten Zustand,

wobei die Informationskombinierungseinrichtung die Position und Haltung des beweglichen Körpers (1) relativ zu dem ihn umgebenden Umfeld korrigiert, wobei der bewegliche Körper (1) in einer dreidimensionalen Umfeldübersicht positioniert ist.

2. Umgebungsüberwachungsvorrichtung für einen beweglichen Körper gemäß Anspruch 1, wobei die Bewegungszustandserfassungseinrichtung (MC) die Position und Haltung des beweglichen Körpers in dem ersten und zweiten Zustand basierend auf den Informationen, die durch die Erfassungseinrichtung (MB) für Informationen über einen beweglichen Körper erfasst werden können, erfasst.

3. Umgebungsüberwachungsvorrichtung für einen beweglichen Körper gemäß Anspruch 1 oder 2, weiterhin mit:

einer Anweisungseingabeeinrichtung (IS) zum Eingeben einer Anweisung bezüglich der spezifischen Ansicht des beweglichen Körpers durch einen Bediener, und
einer Umschalteinrichtung (SW), die in der Erzeugungseinrichtung (SW) für eine spezifische Ansicht umfasst ist, zum Umschalten der spezifischen Ansicht zu einer Ansicht basierend auf der Anweisung von dem Bediener als Antwort auf ein Ergebnis des Eingebens der Anweisungseingabeeinrichtung (IS).

4. Umgebungsüberwachungsvorrichtung für einen beweglichen Körper gemäß Ansprüchen 1 oder 2, weiterhin mit:

einer Hinderniserfassungseinrichtung (OB) zum Erfassen eines Hindernisses, das sich dem Umfeld des beweglichen Körpers nähert, basierend auf den Informationen, die durch die Umfeldinformationserfassungseinrichtung (EI) erfasst werden,

wobei die Erzeugungseinrichtung (SV) für eine spezifische Ansicht die spezifische Ansicht erzeugt, die das durch die Hinderniserfassungseinrichtung (OB) erfasste Hindernis umfasst.

5. Umgebungsüberwachungsvorrichtung für einen beweglichen Körper gemäß Ansprüchen 1 oder 2, weiterhin mit:

einer Bahnschätzeinrichtung (TR) zum Schätzen einer Bewegungsbahn des beweglichen Körpers basierend auf den Informationen, die durch die Erfassungseinrichtung (MB) für Informationen über einen beweglichen Körper erfasst werden, und
einer Überlagerungseinrichtung (OL), die in der Erzeugungseinrichtung (SV) für eine spezifische Ansicht enthalten ist, zum Überlagern der Bewegungsbahn, die durch die Bahnschätzeinrichtung (TR) geschätzt wird, auf die spezifische Ansicht,

wobei die Anzeigeeinrichtung (VD) ein Bild anzeigt, in dem die geschätzte Bewegungsbahn auf der spezifischen Ansicht überlagert ist.

## Revendications

1. Appareil de surveillance de circonstances propres à un corps mobile, comprenant :

un moyen de détection d'informations sur l'environnement (EI) destiné à détecter et à stocker des informations au sujet d'un environnement entourant un corps mobile (1) ;
un moyen de détection d'informations sur le corps mobile (MB) destiné à détecter et à stocker une position et une posture du corps mobile ;
un moyen de combinaison d'informations (CB) destiné à combiner les informations détectées par le moyen de détection d'informations (MB) sur le corps mobile (1) et les informations détectées par le moyen de détection d'informations sur l'environnement (EI), à corriger une relation de position et de posture du corps mobile (1) par rapport à l'environnement entourant le corps mobile (1), et à délivrer en sortie la relation ;
un moyen de création de vue spécifique (SV) destiné à créer une vue spécifique du corps mobile en référence à une information sur un environnement entourant le corps mobile à une position spécifique sur la base des informations délivrées en sortie par le moyen de combinaison d'informations (CB) ; et
un moyen d'affichage (VD) destiné à afficher la vue spécifique créée par le moyen de création de vue spécifique (SV) sous la forme d'une image,
dans lequel le moyen de détection d'informations sur l'environnement (EI) comprend au moins un moyen de capture d'images (IC) monté sur le corps mobile pour obtenir une image du milieu environnant du corps mobile (1) et pour délivrer en sortie l'image, le moyen de capture d'images (IC) obtenant une première image au moins dans un premier état du corps mobile (1) et obtenant une seconde image au moins dans un second état de celui-ci lorsque le corps mobile (1) passe du premier état au second état ;
un moyen de poursuite de points caractéristiques (FP) destiné à détecter une coordonnée d'un point caractéristique sur la première image dans le premier état du corps mobile (1) et à détecter une coordonnée qui correspond au point caractéristique sur la seconde image dans le second état de celui-ci,
un moyen de détection de conditions de mouvement (MC) destiné à détecter la position et la posture, c'est-à-dire l'angle directeur, du corps mobile (1) au moins dans les premier et second états ; **caractérisé par** :

un moyen d'estimation de coordonnées tridimensionnelles (TD) destiné à estimer une coordonnée tridimensionnelle du point caractéristique sur la base de la position et de la posture du corps mobile (1) dans les premier et second états détectés par le moyen de détection de conditions de mouvement (MC), la coordonnée du point caractéristique sur l'image dans le premier état du corps mobile, et la coordonnée qui correspond au point caractéristique, sur l'image prise dans le second état,

dans lequel le moyen de combinaison d'informations corrige la position et la posture du corps mobile (1) par rapport au milieu environnant, de sorte que le corps mobile (1) est positionné sur une carte de l'environnement tridimensionnel.

**2.** Appareil de surveillance de circonstances propres à un corps mobile selon la revendication 1, dans lequel le moyen de détection de conditions de mouvement (MC) détecte la position et la posture du corps mobile dans les premier et second états sur la base des informations détectées par le moyen de détection d'informations sur le corps mobile (MB).

**3.** Appareil de surveillance de circonstances propres à un corps mobile selon la revendication 1 ou 2, comprenant en outre :

un moyen d'entrée d'instruction (IS) destiné à l'introduction d'une instruction relative à la vue spécifique par un opérateur du corps mobile, et
un moyen de commutation (SW) compris dans le moyen de création de vue spécifique (SV) pour commuter la vue spécifique sur une vue fondée sur l'instruction provenant de l'opérateur en réponse à un résultat de l'entrée par le moyen d'entrée d'instructions (IS).

**4.** Appareil de surveillance de circonstances propres à un corps mobile selon la revendication 1 ou 2, comprenant en outre :

un moyen de détection d'obstacle (OB) destiné à détecter un obstacle approchant du milieu environnant du corps mobile sur la base des informations détectées par le moyen de détection d'informations sur l'environnement (EI),

dans lequel le moyen de création de vue spécifique (SV) crée la vue spécifique qui inclut l'obstacle détecté par le moyen de détection d'obstacle (OB).

**5.** Appareil de surveillance de circonstances propres à un corps mobile selon la revendication 1 ou 2, comprenant en outre :

un moyen d'estimation de trajectoire (TR) destiné à estimer une trajectoire de mouvement du corps mobile sur la base des informations détectées par le moyen de détection d'informations sur le corps mobile (MB), et
un moyen de recouvrement (OL) compris dans le moyen de création de vue spécifique (SV) pour recouvrir la trajectoire de mouvement estimée par le moyen d'estimation de trajectoire (TR) sur la vue spécifique,

dans lequel le moyen d'affichage (VD) affiche une image recouvrant la trajectoire de mouvement estimée sur la vue spécifique.

FIG. 1

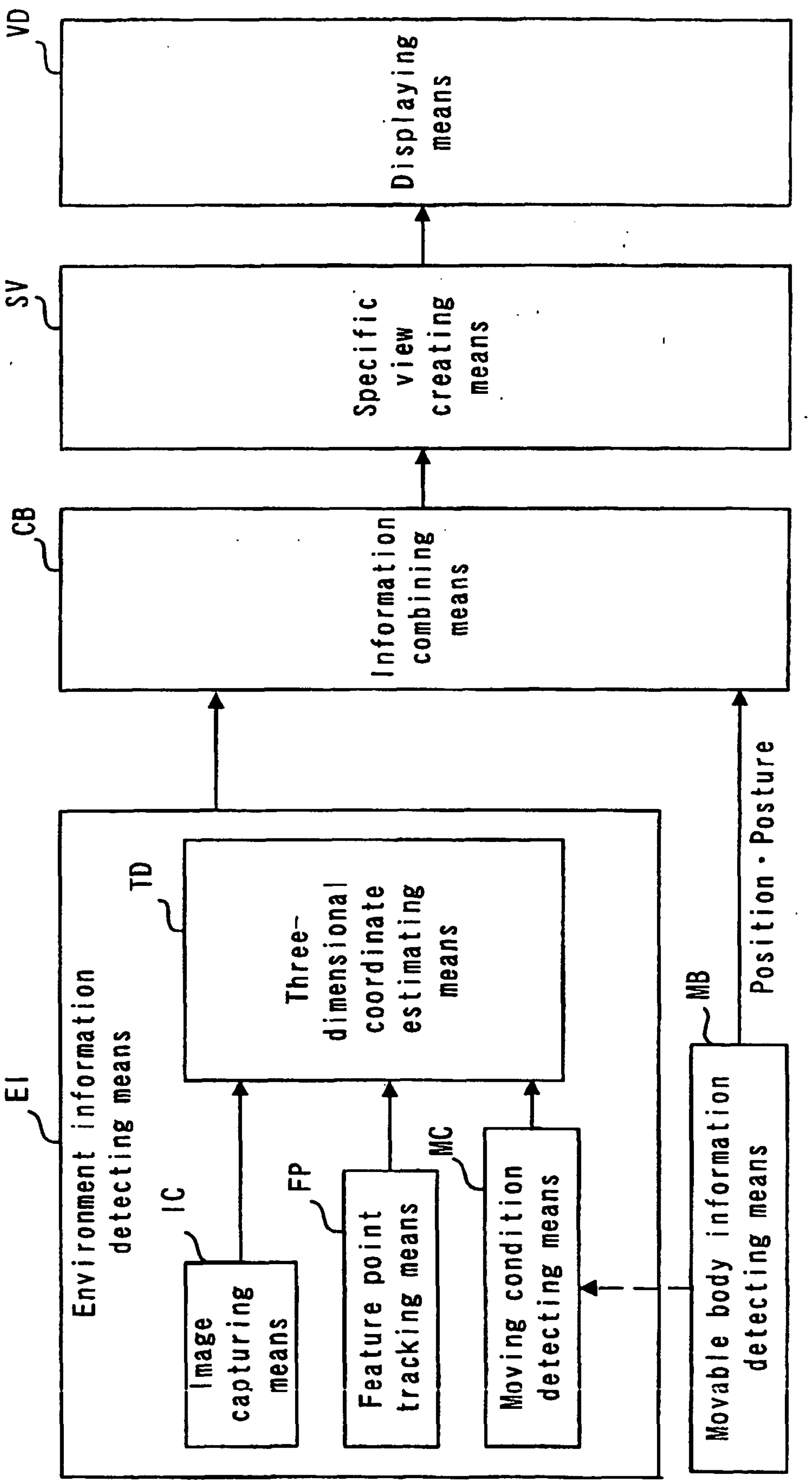
VD
Displaying means
SV
Specific view creating means
CB
Information combining means
EI
Environment information detecting means
IC
Image capturing means
FP
Feature point tracking means
MC
Moving condition detecting means
TD
Three-dimensional coordinate estimating means
MB
Movable body information detecting means
Position · Posture

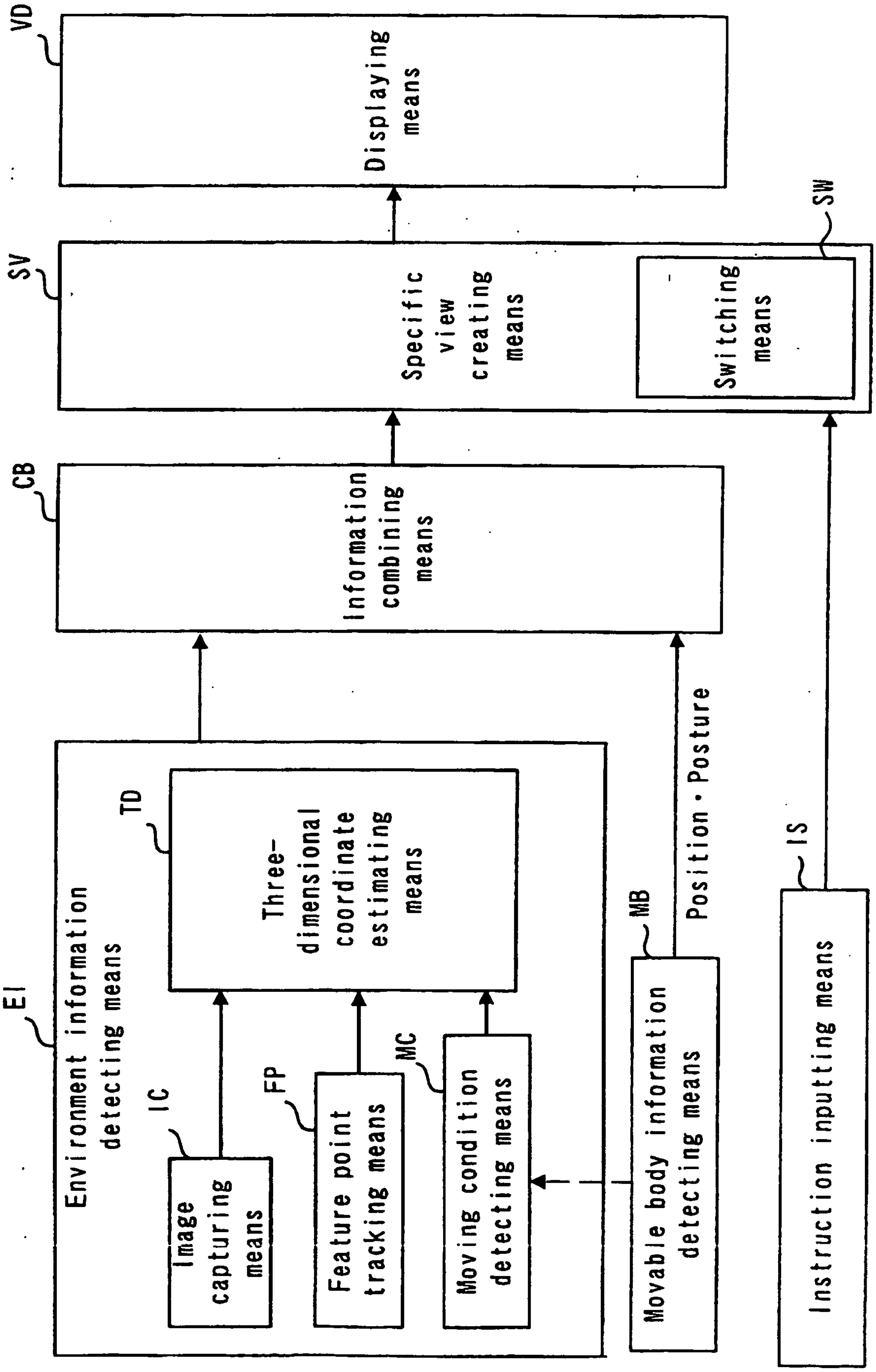
VD
Displaying means
SV
Specific view creating means
SW
Switching means
CB
Information combining means
EI
Environment information detecting means
TD
Three-dimensional coordinate estimating means
IC
Image capturing means
FP
Feature point tracking means
MC
Moving condition detecting means
MB
Movable body information detecting means
Position・Posture
IS
Instruction inputting means

FIG. 2

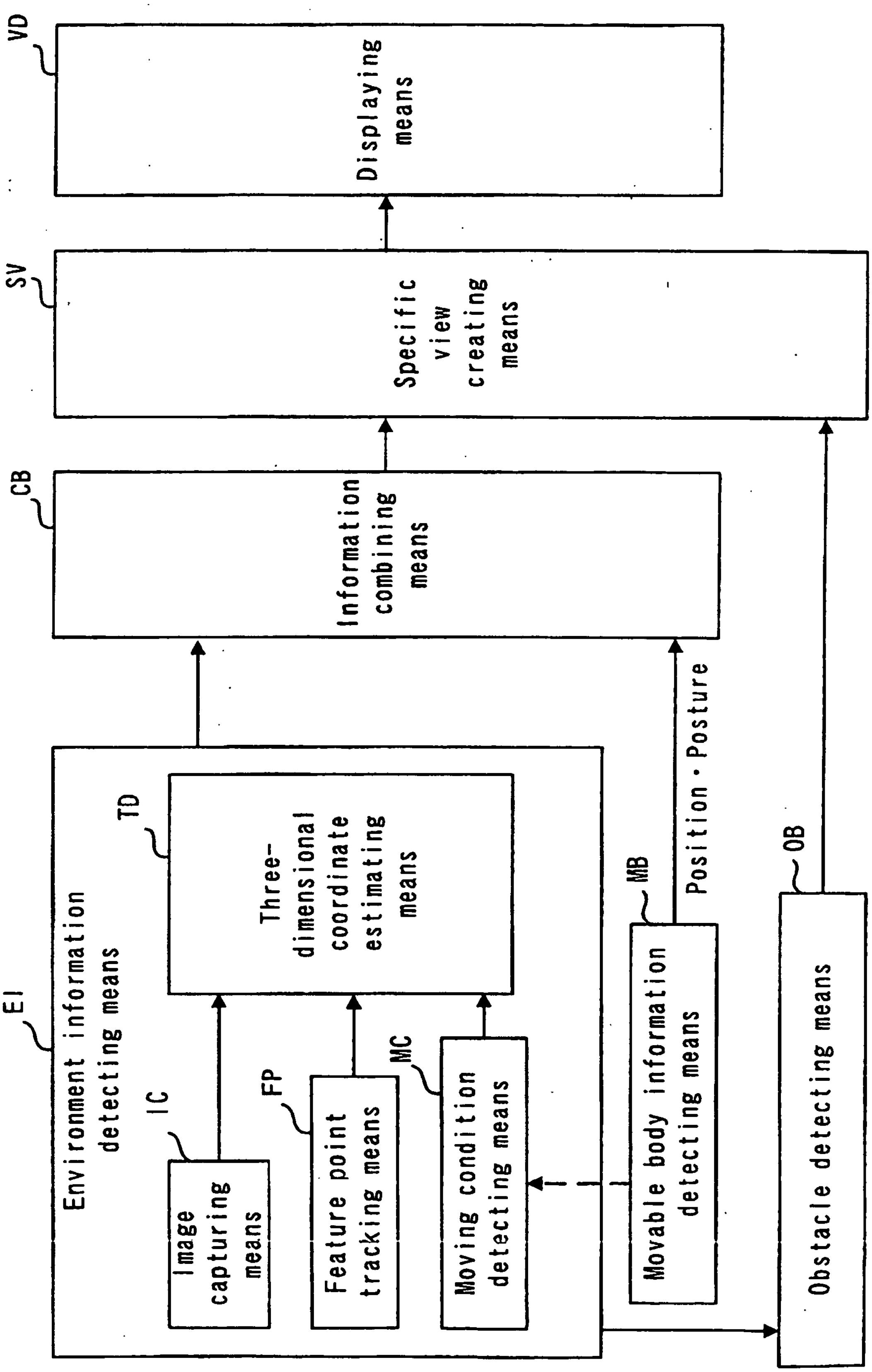
VD
Displaying means
SV
Specific view creating means
CB
Information combining means
EI
Environment information detecting means
TD
Three-dimensional coordinate estimating means
IC
Image capturing means
FP
Feature point tracking means
MC
Moving condition detecting means
MB
Movable body information detecting means
Position · Posture
OB
Obstacle detecting means

FIG. 3

FIG. 4

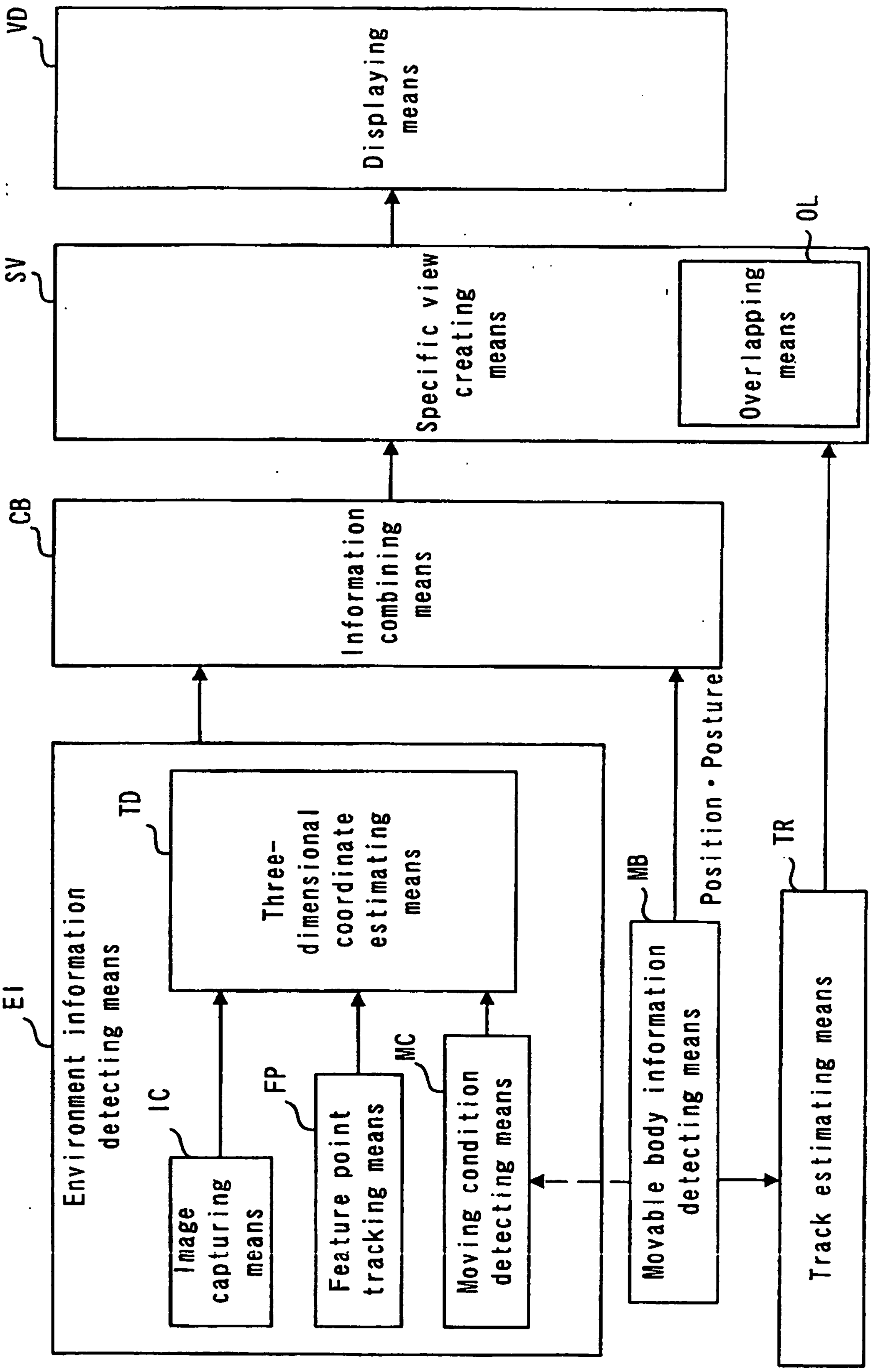
EI
Environment information detecting means
IC
Image capturing means
FP
Feature point tracking means
MC
Moving condition detecting means
TD
Three-dimensional coordinate estimating means
MB
Movable body information detecting means
Position • Posture
TR
Track estimating means
CB
Information combining means
SV
Specific view creating means
OL
Overlapping means
VD
Displaying means

FIG. 5

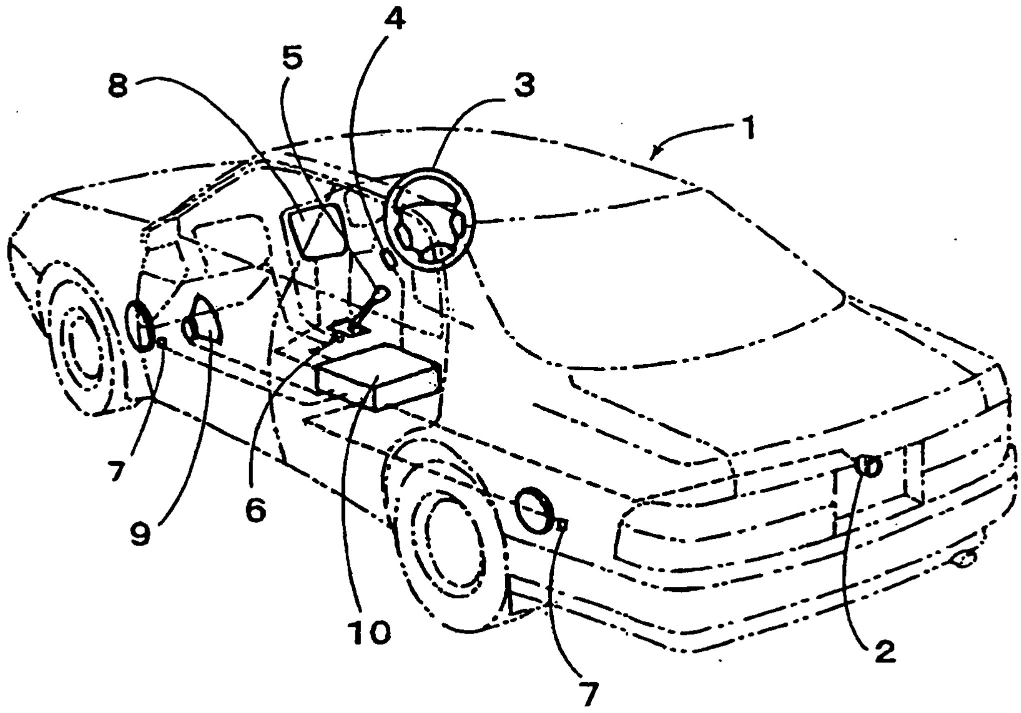

FIG. 6

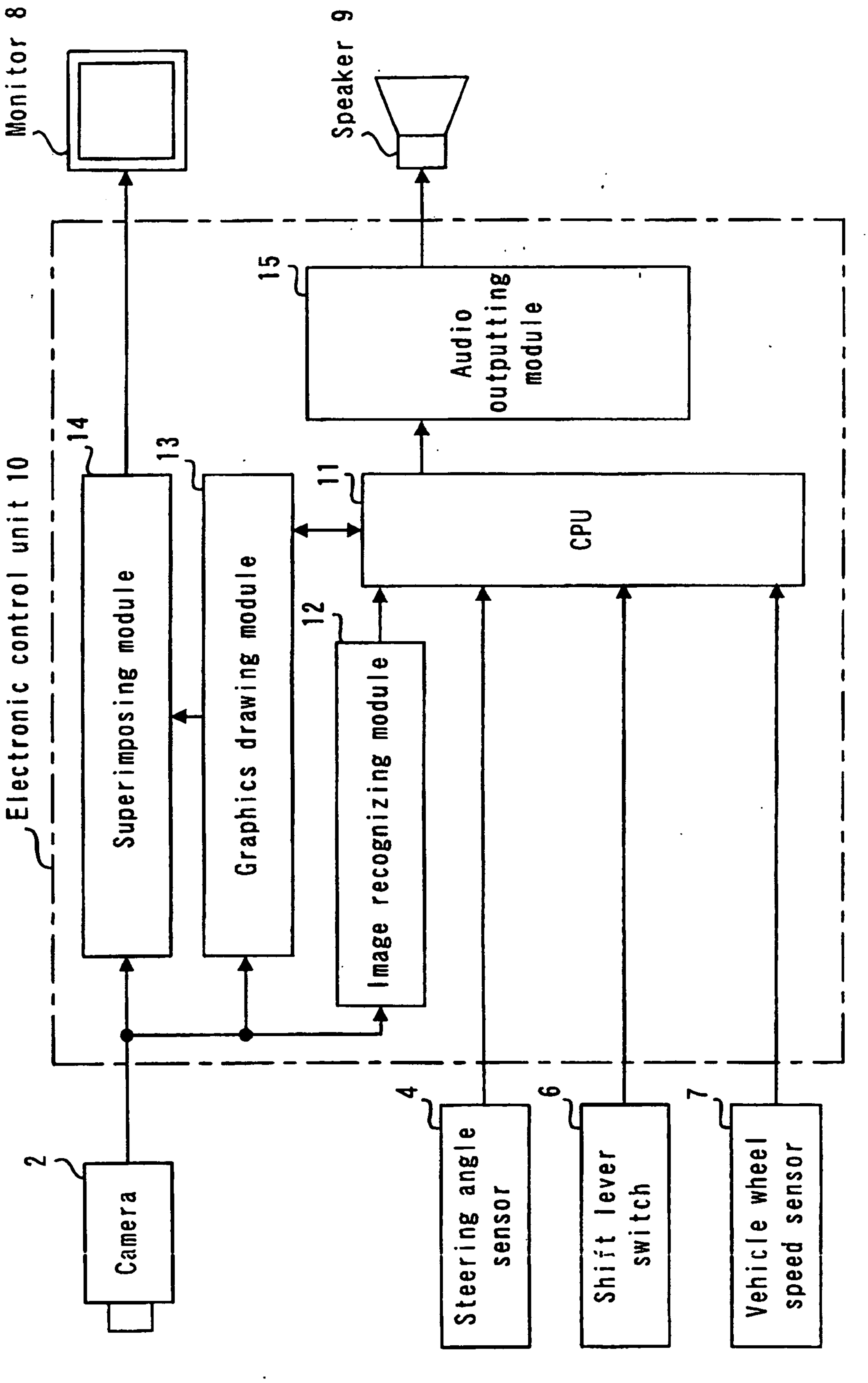
Monitor 8
Speaker 9
Electronic control unit 10
14
Superimposing module
13
Graphics drawing module
15
Audio outputting module
11
CPU
12
Image recognizing module
2
Camera
4
Steering angle sensor
6
Shift lever switch
7
Vehicle wheel speed sensor

# FIG. 7

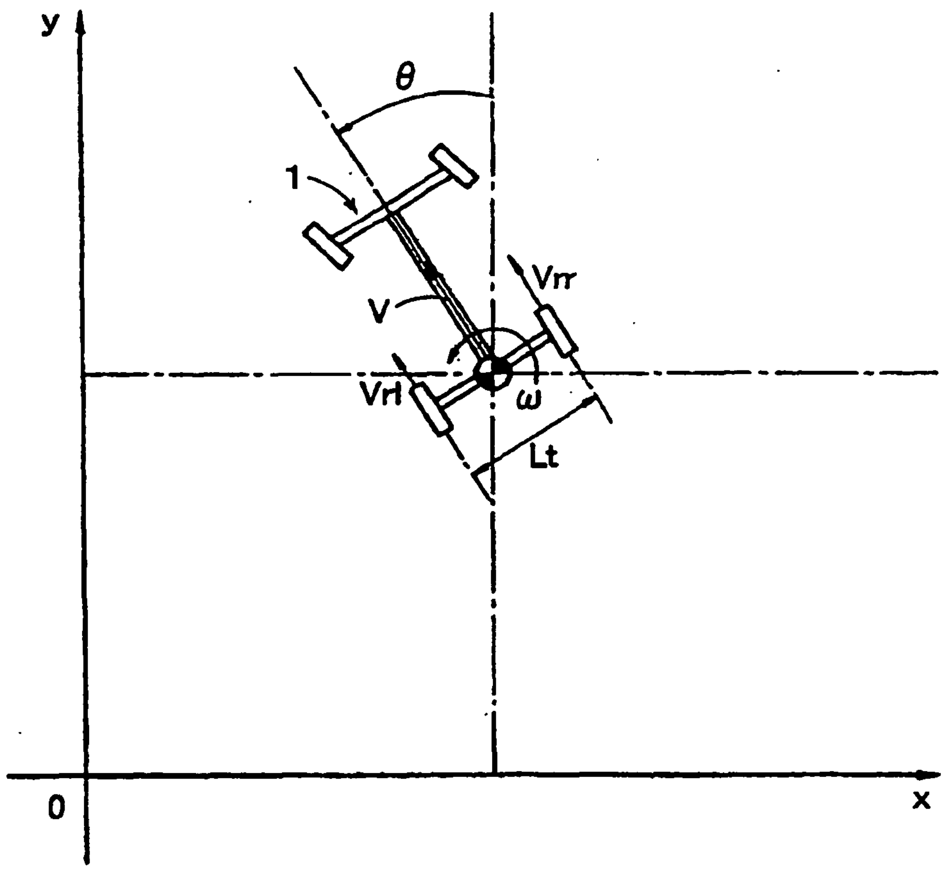

FIG. 8

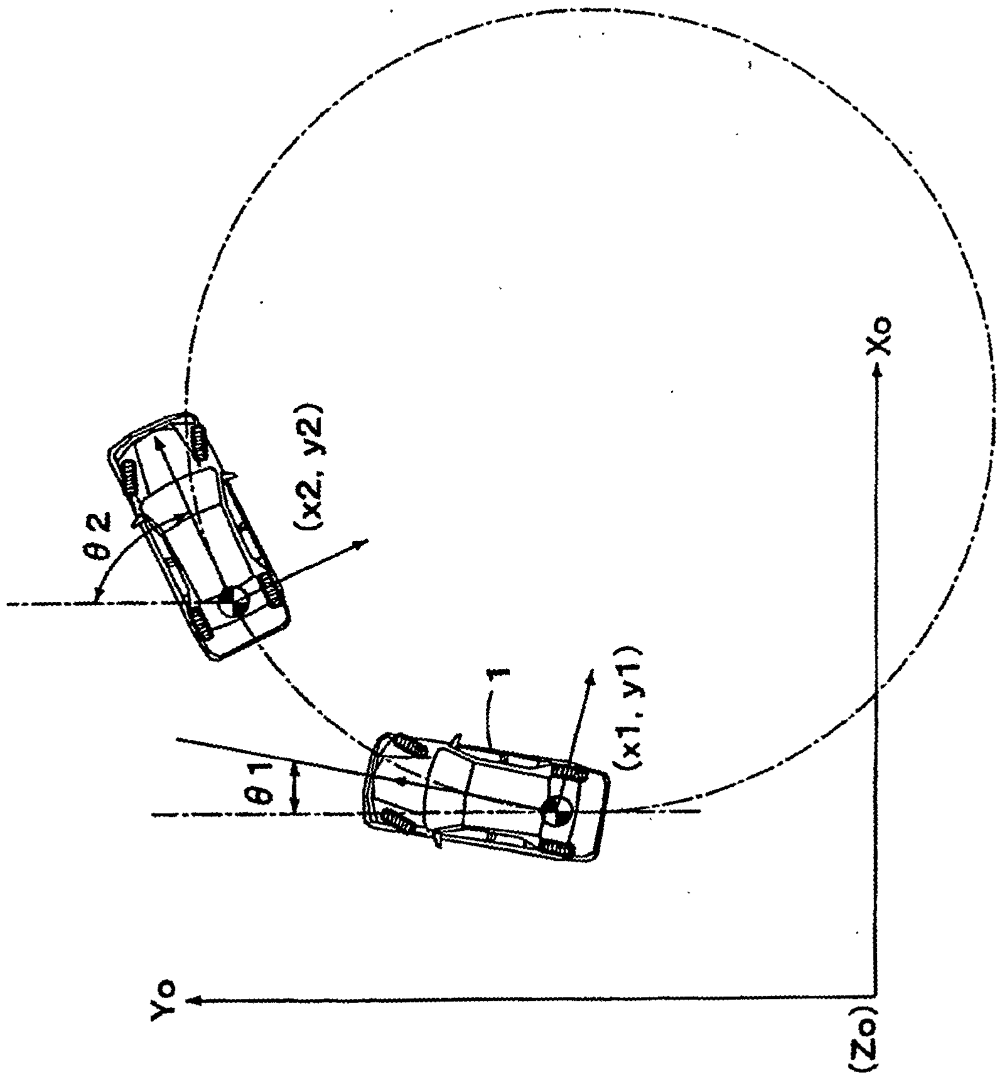

FIG. 9

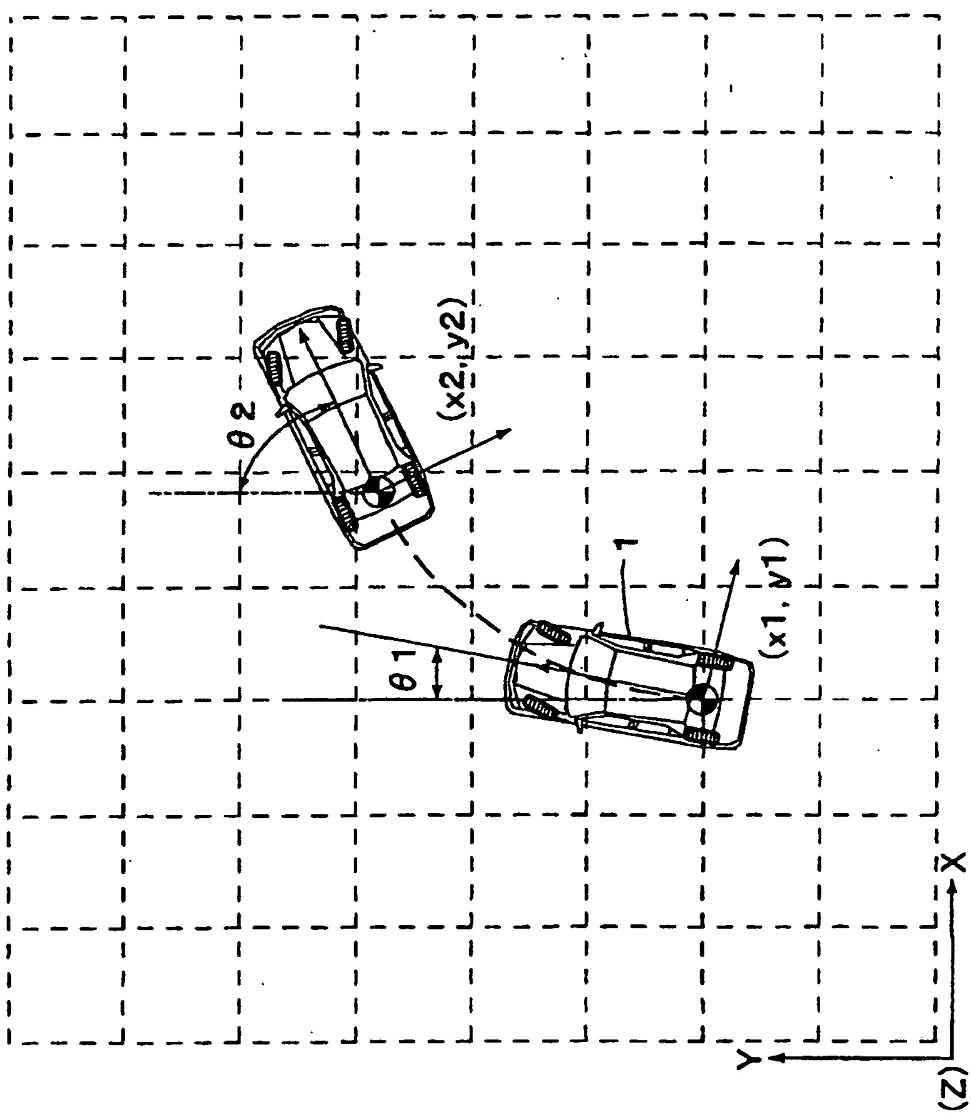

FIG. 10

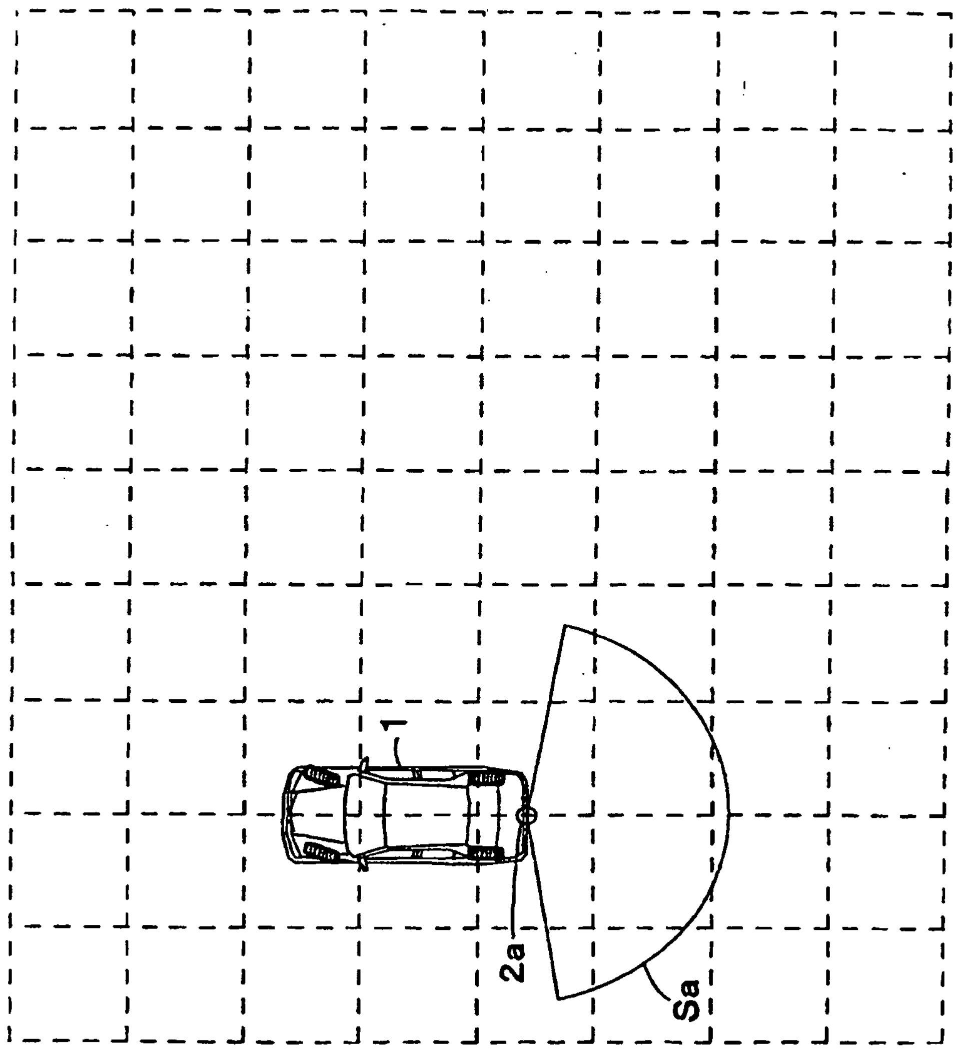

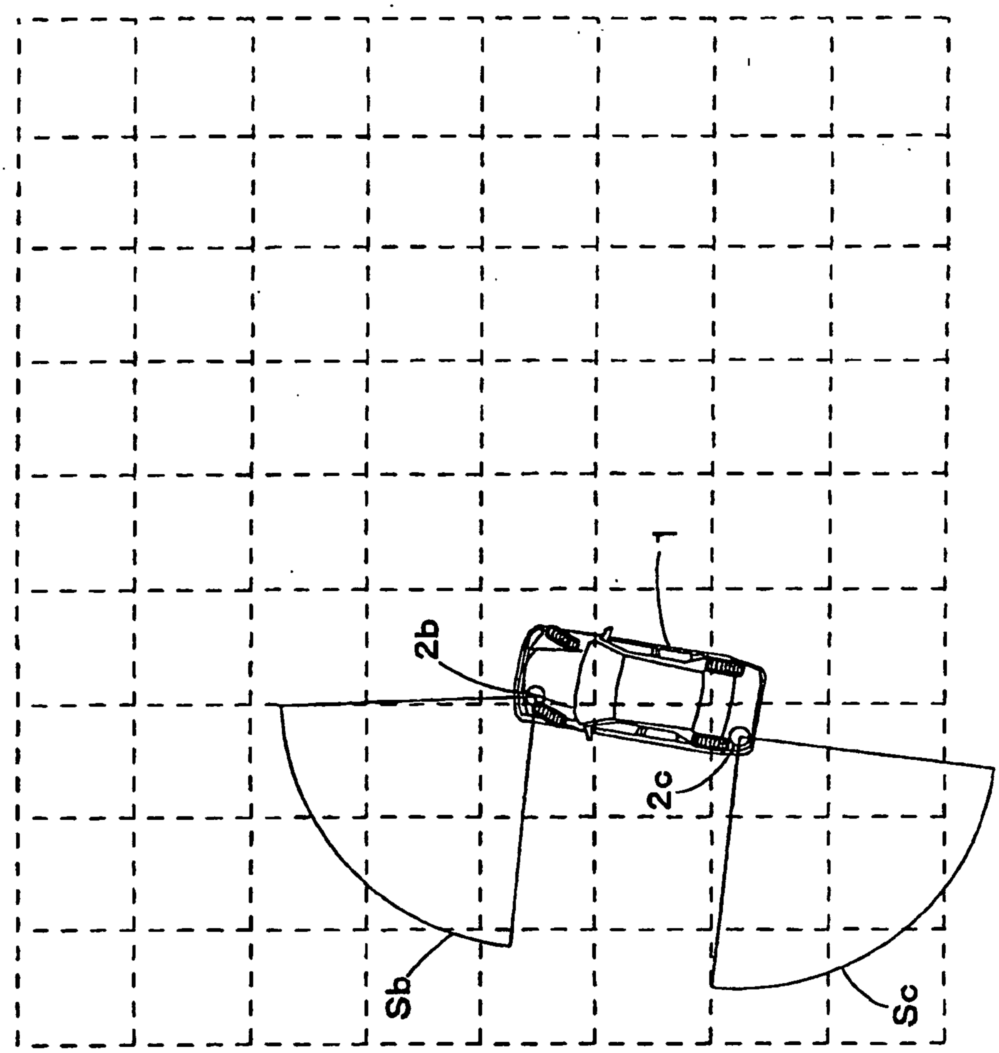


FIG. 11

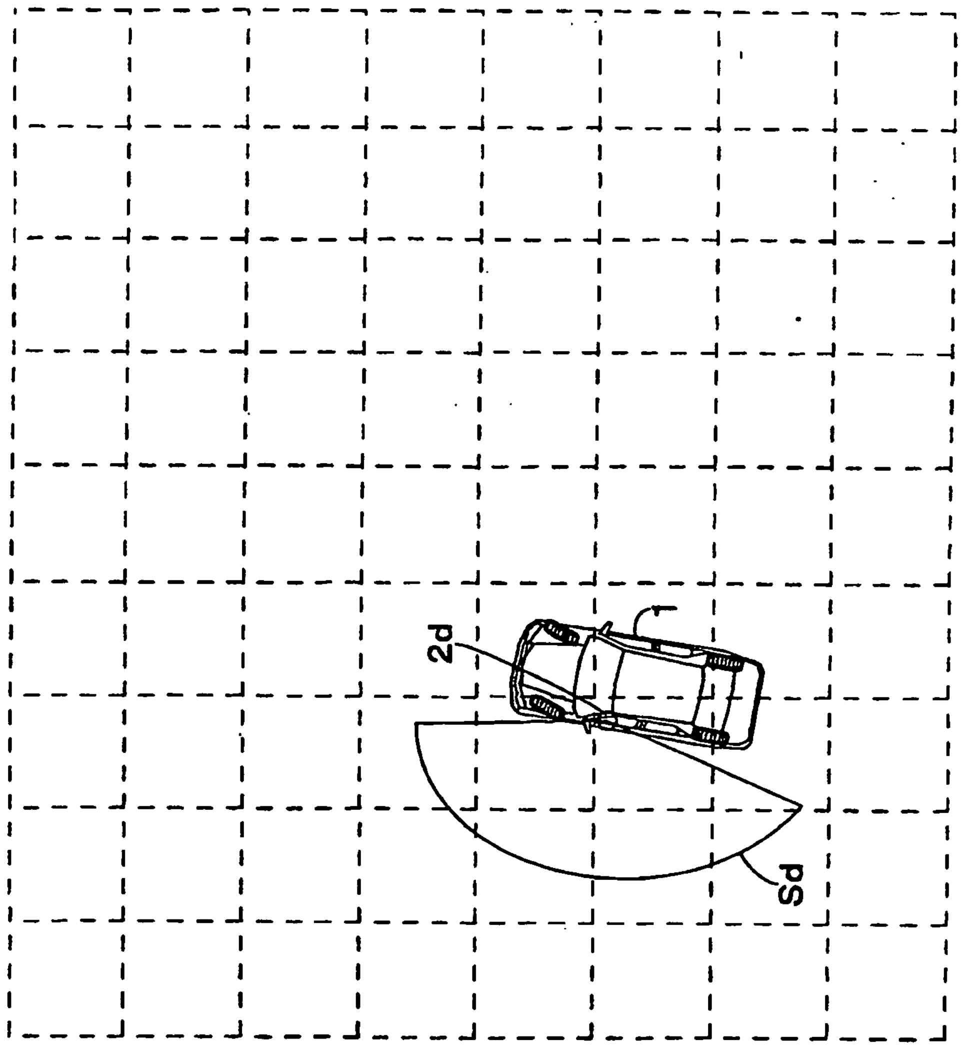


FIG. 12

FIG. 13

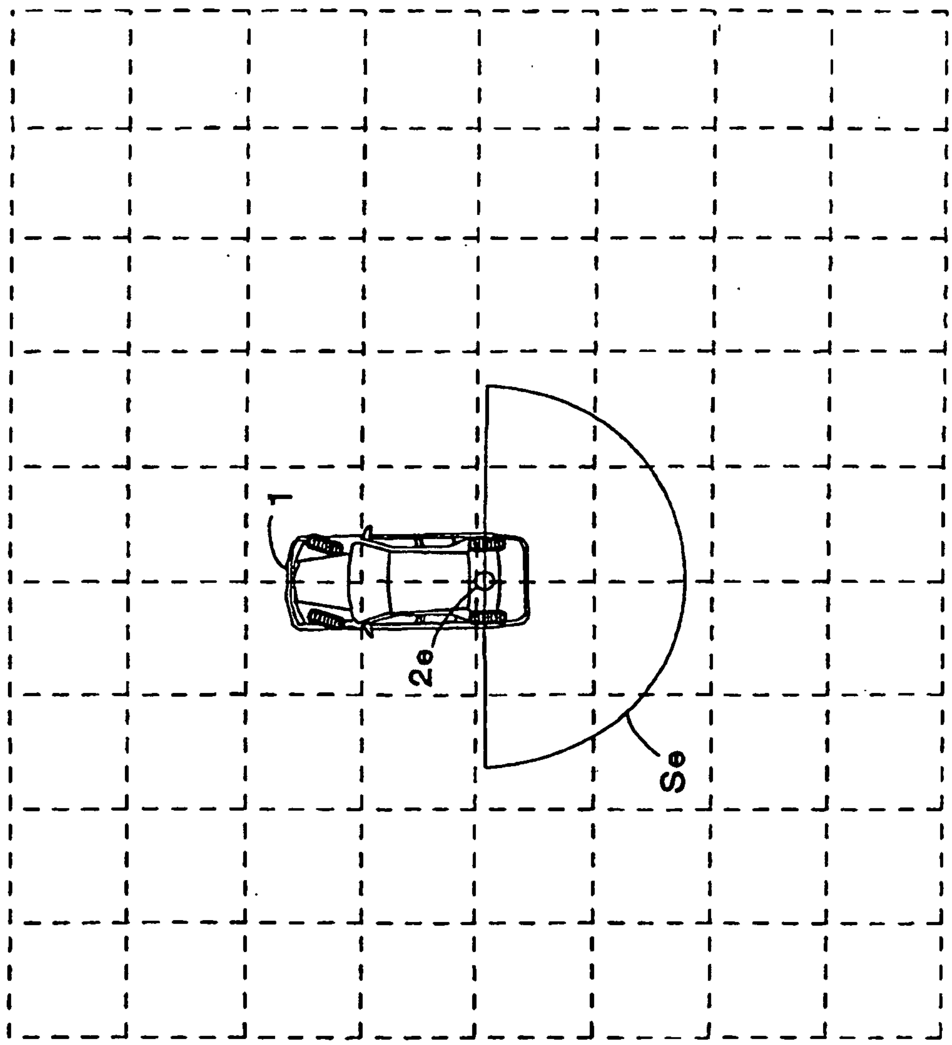

FIG. 14

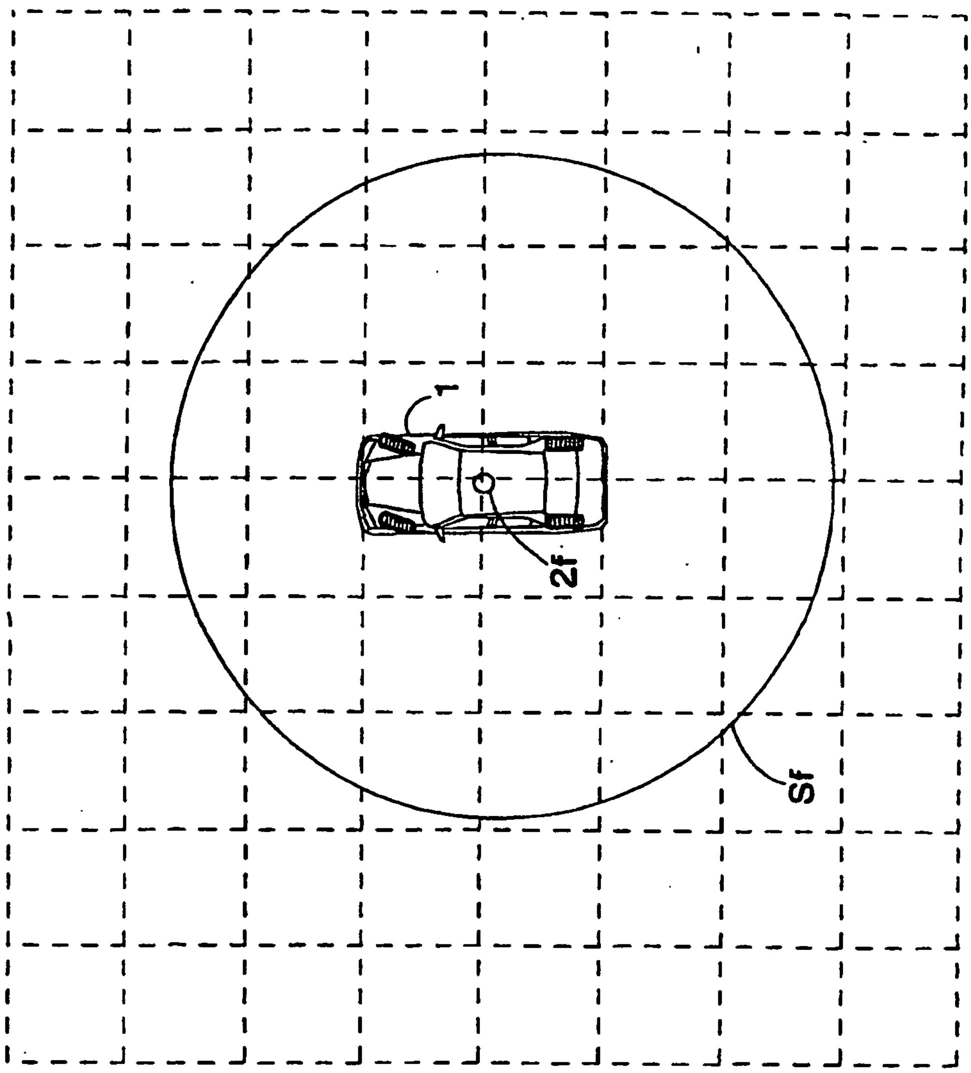

FIG. 15

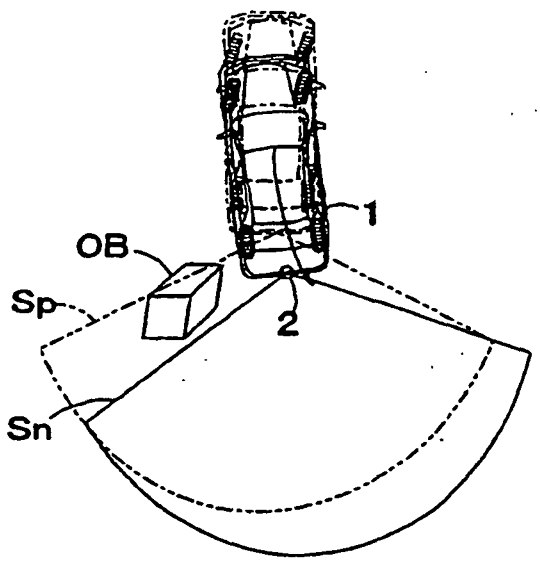


FIG. 16

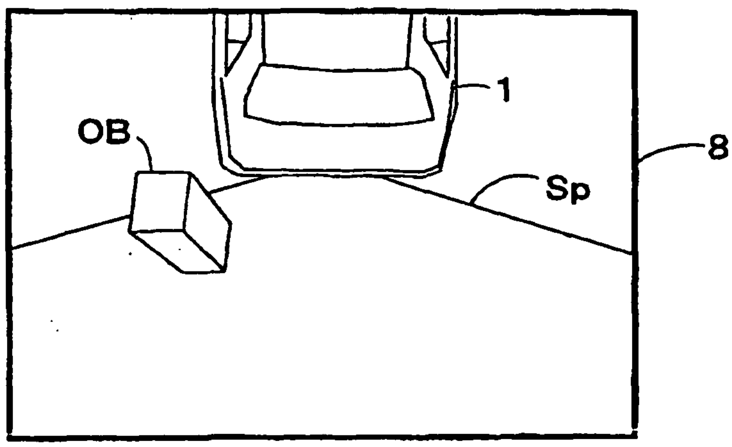

FIG. 17

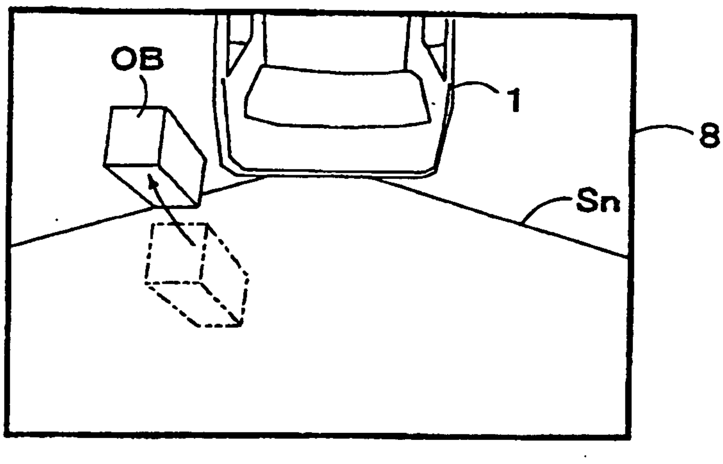

FIG. 18

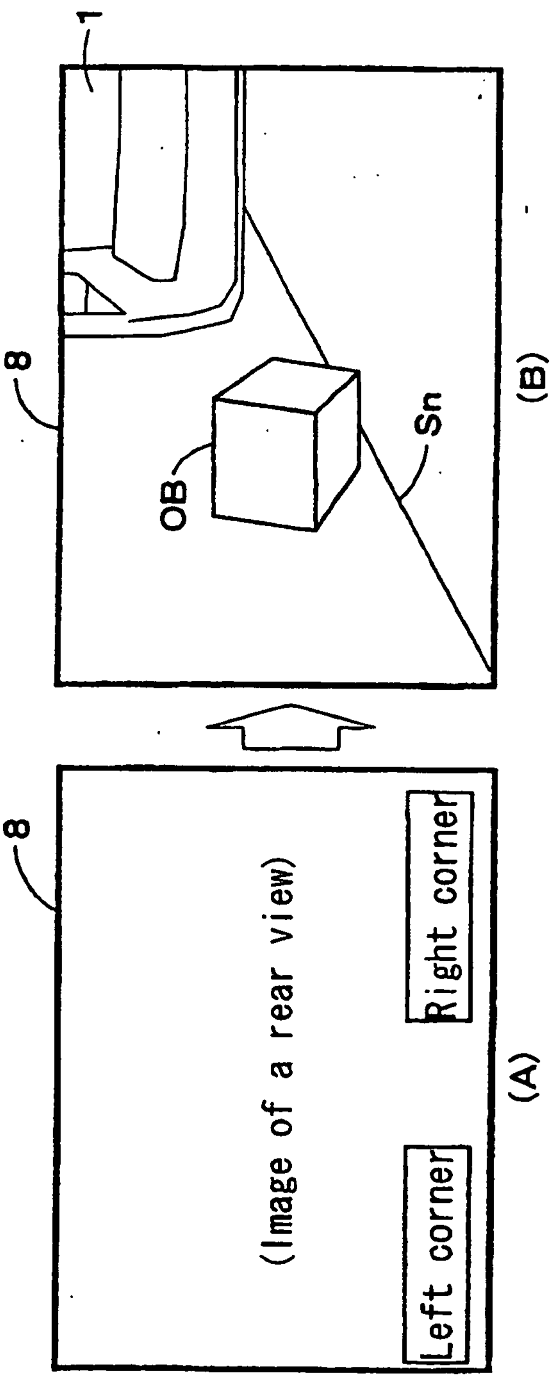

FIG. 19

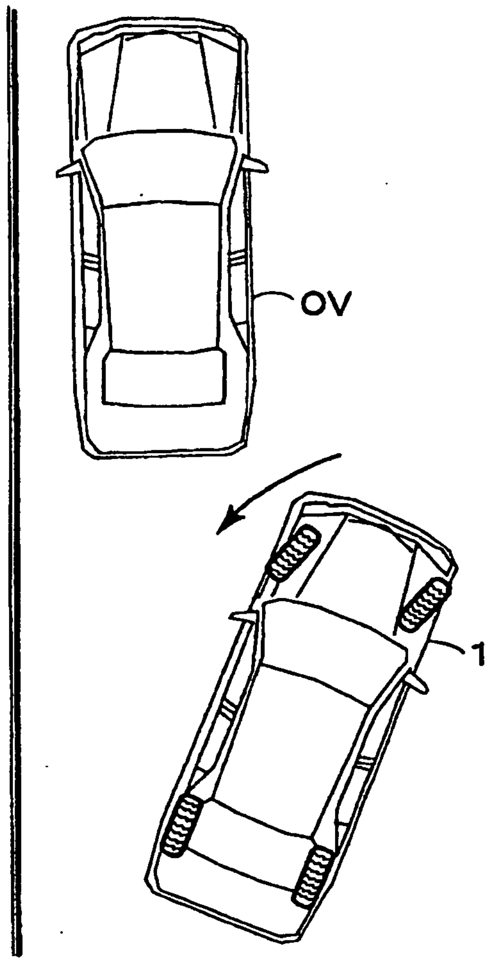

FIG. 20

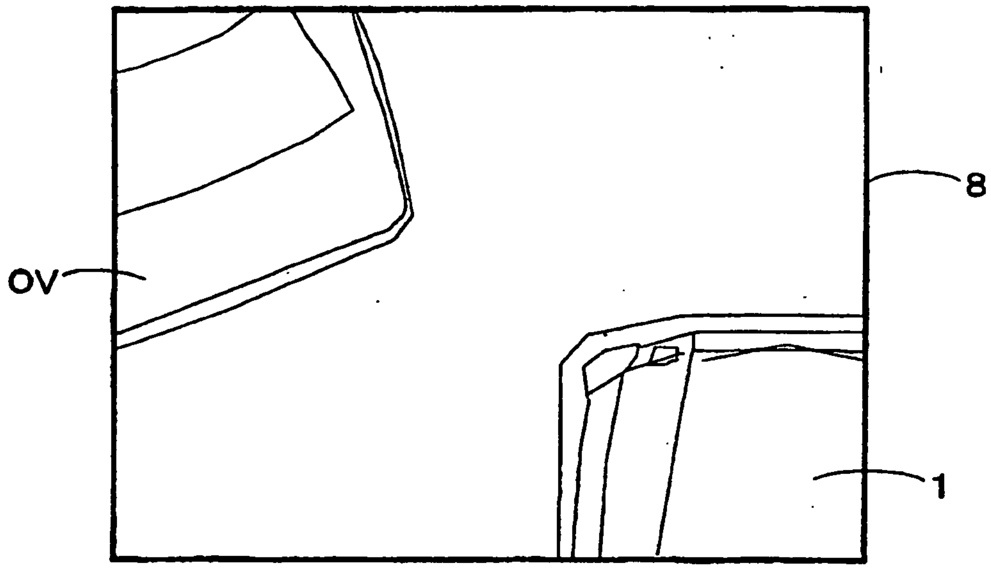


FIG. 21

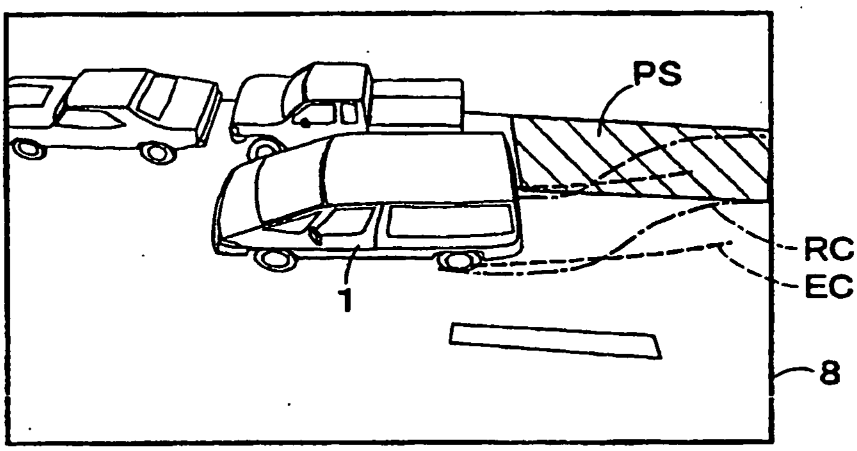

FIG. 22

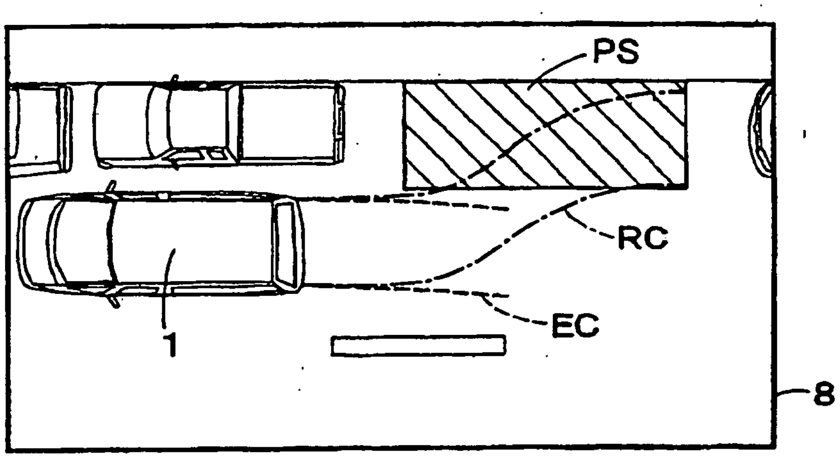


FIG. 23

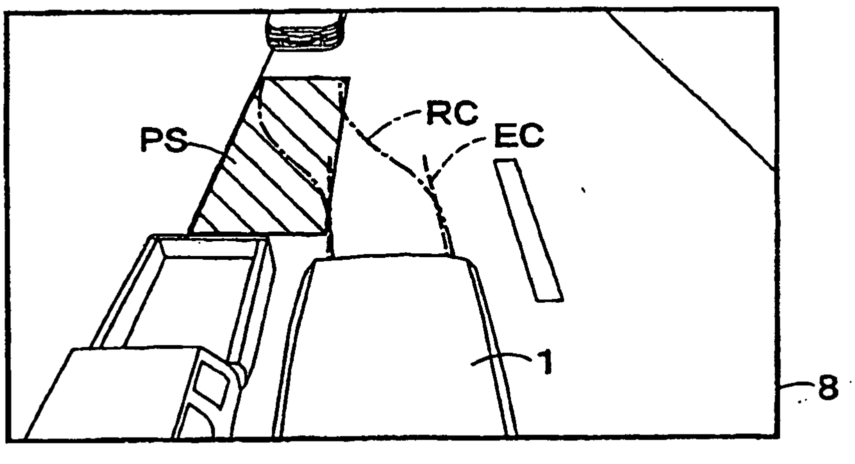

FIG. 24

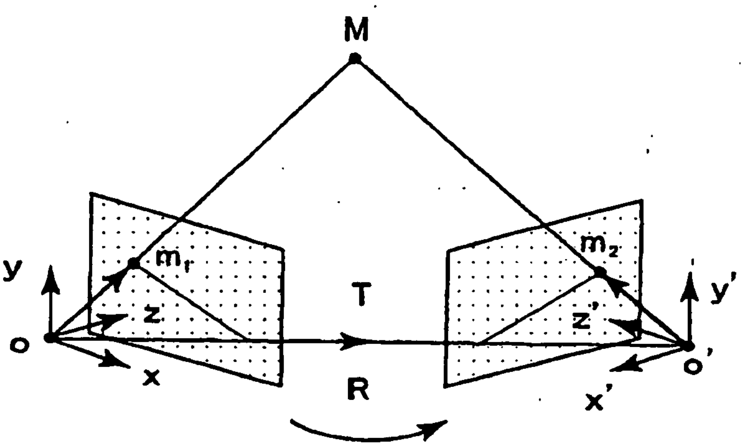


FIG. 25

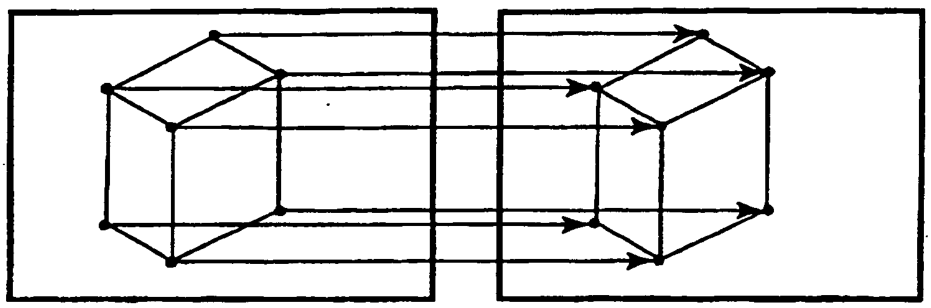

FIG. 26

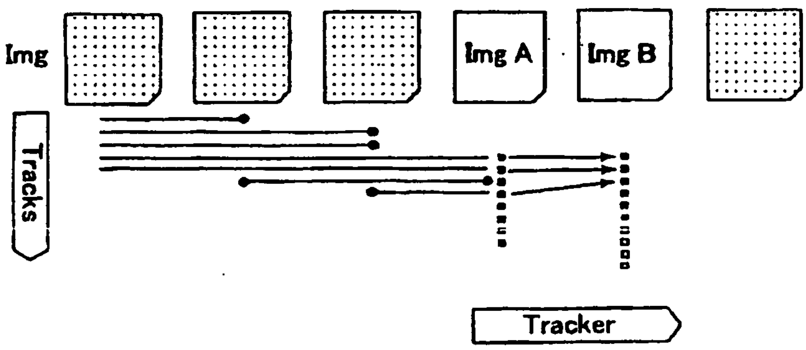

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 62278477 A
- JP 1141137 A
- JP 2001187553 A
- JP 2002052999 A
- EP 1005234 A2

### Non-patent literature cited in the description

- **Koichiro Deguchi.** Solve a Stereophonic mechanism. *Information Processing,* July 1996, vol. 37 (7
- Three-dimensional shape reconstruction by a stereo vision. **KANATANI, Kenichi.** athematics of Spatial data. Asakura, Inc, 10 March 1995, 161, 162
- **Koichiro Deguchi.** Manipulation of Videos. *Information Processing,* August 1996, vol. 37 (8